# EUROPÄISCHE PATENTSCHRIFT

(11) **EP 1 010 702 B1**
(45) Veröffentlichungstag und Bekanntmachung des Hinweises auf die Patenterteilung: **28.07.2004**
(21) Anmeldenummer: 99124078.9
(22) Anmeldetag: 10.12.1999
(51) Int. Cl.: C07F 7/08, C07C 25/13, C07B 37/04, C07F 1/02

(54) **Verfahren zur Herstellung von ortho-substituierten Arylmetallverbindungen und deren Umsetzung mit Elektrophilen**
Process for preparing ortho-substituted aryl metal compounds and their conversion with electrophiles
Procédé de préparation de composés métalliques d'aryl ortho substitués et leur conversion avec des électrophiles

(30) Priorität: 19.12.1998 DE 19858855
(43) Veröffentlichungstag der Anmeldung: 21.06.2000
(73) Patentinhaber: MERCK PATENT GmbH, 64293 Darmstadt (DE)
(72) Erfinder: Stiasny, Christian, Dr., 64347 Griesheim (DE); Reiffenrath, Volker, 64380 Rossdorf (DE)

(56) Entgegenhaltungen:
- EP-A- 0 442 340
- EP-A- 0 552 645
- EP-A- 1 010 703
- WO-A-01/96348
- DE-C- 4 219 281
- US-A- 5 087 764
- FORTH, MICHAEL A. ET AL: "Imine-Directed Metalation of o-Tolualdehyde: The Use of Catalytic Amine Base. A Route to 2-(8-Phenyloctyl)benzaldehyde" J. ORG. CHEM., Bd. 59, Nr. 9, 1994, Seiten 2616-2619, XP001053268

## Beschreibung

Die Erfindung betrifft ein Verfahren zur Herstellung von ortho-substituierten Arylmetallverbindungen durch Deprotonierung von Aromaten, die ein Wasserstoffatom in ortho-Position zu mindestens einem Halogenatom, einer Trifluormethoxygruppe, einer Dialkylaminogruppe, einer Nitrilgruppe, einer Alkoxygruppe oder einer Dialkylamidogruppe aufweisen und deren Umsetzung mit Elektrophilen, dadurch gekennzeichnet, daß die Deprotonierung der Aromaten durch Anwendung von Alkyl- oder Arylmetallverbindungen oder Metallhydriden in Gegenwart einer katalytischen Menge eines sekundären Metallamids erfolgt.

Substituierte Aromaten stellen wertvolle Zwischenprodukte zur Synthese von hochveredelten Endprodukten bzw. selbst solche Endprodukte für die Elektronik-Industrie, wie z. B. Flüssigkristalle, für den Pflanzenschutz, wie z. B. Pestizide oder zur Herstellung von pharmazeutischen hochwirksamen Substanzen, wie z. B. Dopamin-Rezeptor-Blocker, Antiemetika oder Antipsychotika, dar.

Dies gilt insbesondere für Aromaten, die in ortho-Position zu einem Halogenatom, einer Trifluormethoxygruppe, einer Dialkylaminogruppe, einer Nitrilgruppe, einer Alkoxygruppe oder einer Dialkylamidogruppe substituiert sind.

Verschiedene Wege zur Herstellung solcher Verbindungen sind in der Literatur beschrieben.

So erhält man z. B. bei der von D. L. Ladd in J. Org. Chem. 46, 203 (1981) beschriebenen Metallierung von 1,4-Difluorbenzol mit Butyllithium bei < -65 °C 1-Lithium-2,5-difluorbenzol, das bei gleicher (tiefer) Temperatur mit Trimethylborat zu 2,5-Difluorbenzolboronsäuredimethylester umgesetzt wird (Schema 1).

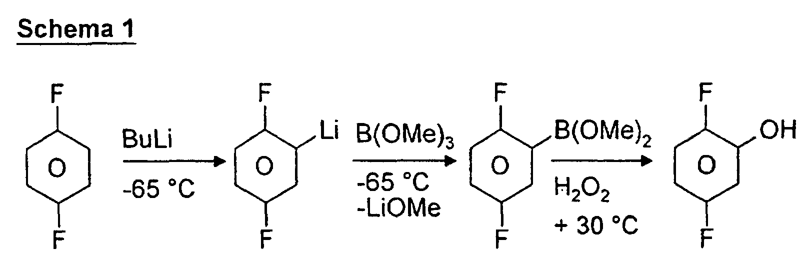

Aus dem Boronat entsteht durch Oxidation mit Wasserstoffperoxid das entsprechende Phenol.

Diese Reaktionsfolge wird auch in der WO 89/2425 zur Herstellung des 2,3-Difluorphenols beschrieben, wobei die Reaktionstemperaturen nicht und die Reaktionsbedingungen nur wenig geändert sind (Schema 2).

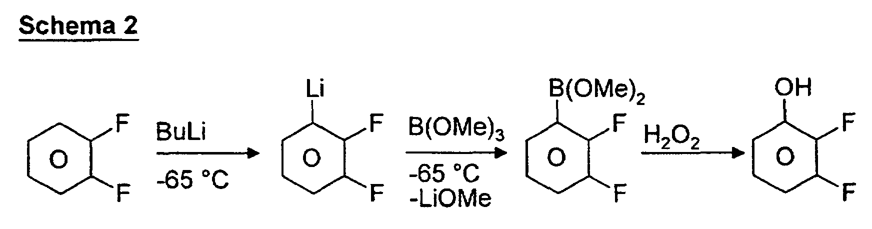

Weiterhin wird in der WO 89/2425 die Herstellung von flüssigkristallinen 2,3- bzw. 2',3'-Difluor-p-terphenylen ausgehend von 1,2-Difluorbenzol beschrieben. In der WO 89/8629 ist die Darstellung von weiteren anderen flüssigkristallinen Verbindungen, welche eine 2,3-Difluor-1,4-phenylengruppe aufweisen, beschrieben. In den dort beschriebenen Verfahren wird das 1,2-Difluorbenzol bzw. 1-substituiertes-2,3-Difluorbenzol mit einer starken Base, in der Regel mit n-Butyllithium deprotoniert und die erhaltene 2,3-Difluorphenyllithiumverbindung mit einem Elektrophil umgesetzt.

Der Grund für die tiefen Reaktionstemperaturen liegt in der geringen Stabilität der ortho-Halogenarylmetallverbindungen. Beispielsweise spalten 2,3-Difluorphenyllithium-Derivate oberhalb -50 °C Lithiumfluorid ab, wobei 1-Fluor-2,3-benzin-Derivate entstehen, welche unkontrolliert zu unbekannten Folgeprodukten weiterreagieren. Bei -50 °C ist die Geschwindigkeit der Zersetzungsreaktion der 2,3-Difluorphenyllithium-Derivate noch gering, sie verläuft jedoch explosionsartig bei -25 °C (kritische Temperatur -22,5 °C), wobei sich die 2,3-Difluorphenyllithium-Derivate schlagartig zersetzen.

Analog zu den ortho-Fluorarylmetallverbindungen sind auch andere ortho-Halogenarylmetallverbindungen durch den Einsatz von ortho-ständigem Wasserstoff mit Hilfe einer Base erhältlich (z. B. Houben-Weyl, Methoden der organischen Chemie, Bd. 13/1, 122-123, Stuttgart 1970).

Im Vergleich zu den ortho-Fluorarylmetallverbindungen zeigen andere ortho-Halogenarylmetallverbindungen jedoch in der Regel eine noch geringere Stabilität, so daß die Zersetzungsreaktionen schon bei deutlich niedrigeren Temperaturen auftreten. Aus Bull. Soc. Chim. France 1986 No. 6, 925-929 ist beispielsweise bekannt, daß in ortho-Stellung metallierte Chlorarylverbindungen leicht in einer exothermen Reaktion Chlorid abspalten, wodurch Arine gebildet werden, die zur Bildung unerwünschter Nebenprodukte Anlaß geben.

Nach DE 42 19 281 können auch solche Wasserstoff-Atome eines Aromaten ersetzt werden, die sich in ortho-Position zu einer Trifluormethoxy-Gruppe befinden. Weiterhin sind Deprotonierungen in ortho-Position zu anderen Gruppen wie z.B. Alkoxygruppen, Cyanogruppen, Aminen und Amiden beschrieben worden (S. Patai (Ed.) The Chemistry of the funktional groups, Vol.4, John Wiley & Sons 1987, Seiten 59-67). Auch bei diesen Gruppen ist in der Regel die Einhaltung niedriger Temperaturen erforderlich, um Nebenreaktionen zu vermeiden.

Sehr tiefe Temperaturen sind insbesondere dann notwendig, wenn der zu deprotonierende Aromat reaktive Gruppen enthält, wie Ester- oder Cyanogruppen, die mit der schon gebildeten Arylmetallverbindung oder der verwendeten Base bei höheren Temperaturen reagieren würden.

Viele der genannten Aromaten, die wegen ihrer reaktiven Gruppen auch als Elektrophil reagieren können, wie z.B. Benzonitrilen werden daher vorzugsweise mit Hilfe eines Lithiumamids, das aus sekundären Aminen hergestellt wird, deprotoniert, um eine Addition von Alkyllithiumverbindungen an die elektrophilen Gruppen zu vermeiden (z.B. J. Org. Chem 47, 2681, 1982). So ist aus EP 552 645 A2 ein Verfahren zur Umsetzung von chlorierten Aromaten mit Elektrophilen in ortho-Stellung zum Chloratom bekannt, bei welchem man zu einem Gemisch aus dem chlorierten Aromaten und dem Elektrophil eine starke Base, zum Beispiel Lithiumdiisopropylamid, in wenigstens äquimolaren Mengen zugibt; die Verwendung katalytischer Mengen einer Base wird nicht offenbart. EP 442 340 A2 beschreibt ein Verfahren zur Lithiierung von 1,3-Bis(trifluormethyl)benzol in ortho-Stellung einer der Trifluormethylgruppen mit wenigstens äquimolaren Mengen des Lithiumsalzes eines sekundären Amins sowie die Umsetzung des so lithiierten Benzolderivats mit Elektrophilen vorzugsweise bei Temperaturen unter 0 °C. Die Verwendung katalytischer Mengen des sekundären Lithiumamids wird nicht offenbart. Für industrielle Verfahren kommen mit solchen Lithiumamiden wegen der hohen Kosten des zugrundeliegenden Amins jedoch nicht in Frage.

Aus J. Org. Chem., 59, 2616, 1994, ist die Deprotonierung des tert.-Butylimins von ortho-Tolylaldehyd am Methylsubstituenten des Aromaten mittels eines Gemischs aus 100 mol% n-Butyllithium und 10 mol% 2,2,6,6-Tetramethylpiperidin (oder anderen sekundären Aminen) sowie die weitere Umsetzung mit einem Elektrophil bekannt. Die Deprotonierung erfolgt jedoch nicht am aromatischen Ring, sondern an seinem Alkylsubstituenten.

Die sehr tiefen Temperaturen, die in der Regel bei den empfindlichen ortho-substituierten Arylmetallverbindungen eingehalten werden müssen, erweisen sich als insbesondere nachteilig, wenn Aromaten mit nur sehr gering acidem Wasserstoff-Atom deprotoniert werden sollen. Solche Aromaten erfordern häufig sehr lange Reaktionszeiten ergeben nur schlechte Ausbeuten oder lassen sich bei tiefen Temperaturen oftmals gar nicht deprotonieren, während bei höheren Temperaturen Nebenreaktionen auftreten.

Höhere Deprotonierungsgeschwindigkeiten und damit auch bessere Ausbeuten an Arylmetallverbindung, können bei den Verfahren nach dem Stand der Technik bei Einhaltung tiefer Temperaturen häufig nicht erreicht werden.

Aufgabe der vorliegenden Erfindung war es, ein Verfahren zur Herstellung von ortho-substituierten Arylmetallverbindungen und deren Umsetzung mit Elektrophilen und insbesondere ein Verfahren zur Herstellung von ortho-Halogenarylmetallverbindungen und deren Umsetzung mit Elektrophilen zu finden, das die beschriebenen Nachteile der bisherigen Verfahren nicht aufweist und kostengünstig im großtechnischen Maßstab durchzuführen ist.

Es wurde jetzt gefunden, daß die Herstellung von Arylmetallverbindungen durch Deprotonierung von Aromaten, die ein Wasserstoffatom in ortho-Position zu einem Halogenatom, einer Trifluormethoxy-Gruppe, einer Dialkylaminogruppe, einer Nitrilgruppe, einer Alkoxygruppe oder einer Dialkylamidogruppe aufweisen, sich gefahrlos und mit hoher Ausbeute durchführen läßt, wenn man die entsprechenden Aromaten in Gegenwart einer katalytischen Menge eines sekundären Metallamids mit Alkyl- oder Arylmetallverbindungen oder Metallhydriden behandelt. Die gebildeten ortho-substituierten Arylmetallverbindungen können in gewohnter Weise mit Elektrophilen umgesetzt werden.

Bei dem erfindungsgemäßen Verfahren werden katalytische Mengen eines sekundären Amins durch Anwendung einer Alkyl- oder Arylmetallverbindung oder einem Metallhydrid in das entsprechende Metallamid übergeführt. Nach Deprotonierung des jeweiligen Aromaten durch dieses Metallamid wird das bei der Reaktion zurückgebildete Amin erneut durch gegenwärtige Alkylmetall- oder Arylmetall-Verbindung oder ein Metallhydrid in das Metallamid übergeführt. Überraschender Weise erhöht die Anwendung von katalytischen Mengen des sekundären Amins die Deprotonierungsgeschwindigkeit und die Ausbeute an Arylmetallverbindung, obwohl Metallamide im allgemeinen eine geringere Basizität als beispielsweise Alkyllithiumverbindungen aufweisen.

Nach dem erfindungsgemäßen Verfahren ist es überraschend möglich, lithiierte Aromaten, die als wertvolle Zwischenprodukte beispielsweise für Flüssigkristalle, Hilfsstoffe, Pflanzenschutzmittel und Pharmaka eingesetzt werden können, in einfacher und kostengünstiger Weise in höheren Ausbeuten herzustellen. Durch den Einsatz nur katalytischer Mengen des sekundären Amins werden Kosten eingespart und die Aufarbeitung der Reaktionsgemische erleichtert, da nur geringe Mengen des Amins abgetrennt und gegebenenfalls entsorgt werden müssen.

Gegenstand der Erfindung ist somit ein Verfahren zur Herstellung von ortho-substituierten Arylmetallverbindungen durch Deprotonierung von Aromaten, die ein Wasserstoffatom in ortho-Position zu mindestens einem Halogenatom, einer Trifluormethoxygruppe, einer Dialkylaminogruppe, einer Nitrilgruppe einer Alkoxygruppe oder einer Dialkylamidogruppe aufweisen und deren Umsetzung mit Elektrophilen zu den Verbindungen der Formel I, 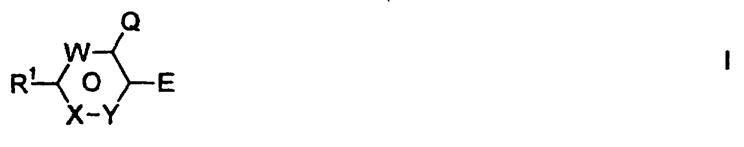 wobei
- Q: F, Cl, CN, OCF₃, CONR₂, NR₂ oder OR,
- R: Alkyl mit 1 bis 7 C-Atomen,
- R¹: H, F, Cl, Br, CN, Alkyl, Alkenyl, Alkoxy, Alkenyloxy mit jeweils bis zu 18 C-Atomen oder eine mesogene Gruppe,
- W, X und Y: jeweils unabhängig voneinander CH, CCN, CCI oder CF,
und
- E: 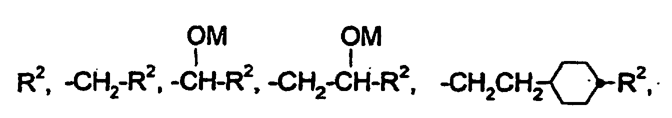 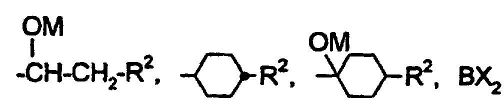 oder SI, 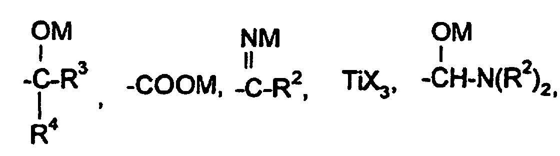 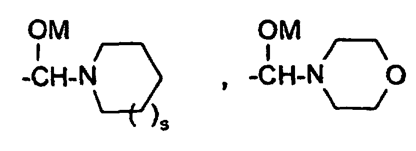 oder ZnX
worin
- R²: Alkyl, Alkoxy, Alkenyl, Alkenyloxy mit bis zu 15 C-Atomen oder einen der Gruppe R¹ entsprechenden mesogenen Rest,
- M: Li, K oder Na,
- S: O oder 1,
- BX₂: einen Trioxatriborinonrest der Formel 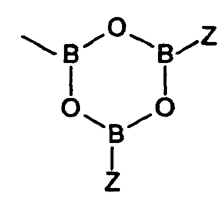 worin Z für 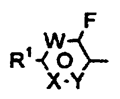 steht oder eine Gruppe der Formel - B(OR³)(OR⁴),
- R³ und R⁴: H, Alkyl, Alkenyl oder Cycloalkyl mit jeweils bis zu 10 C-Atomen oder zusammengenommen eine Alkylendiylgruppe der Formel -(CH₂)ₙ- oder -CH₂CHR⁵-CH₂-, worin n 2, 3 oder 4 ist und R⁵ Alkyl, Alkoxy oder Alkenyl mit bis zu 18 C-Atomen oder einen der Formel II entsprechenden mesogenen Rest, und
- SI: eine Trihydrocarbylsilylgruppe der Formel -Si(R⁶)₃ worin R⁶ jeweils unabhängig voneinander aliphatischer, cycloaliphatischer, araliphatischer oder aromatischer Rest ist,
- TiX₃: einen Rest der Formel TiBr₃, TiCl₃ oder Ti(OR₃)₃
- ZnX: einen Rest der Formel ZnBr, ZnCl, ZnR³ oder ZnOR³
bedeuten, dadurch gekennzeichnet, daß die Deprotonierung der Aromaten durch Anwendung von Alkyl- oder Arylmetallverbindungen oder Metallhydriden in Gegenwart einer katalytischen Menge eines sekundären Metallamids erfolgt.

Insbesondere sind solche Verfahren Gegenstand der Erfindung, worin R¹ eine mesogene Gruppe der Formel II bedeutet, wobei

R⁰-A¹-Z¹-(A²-Z²)ₘ- II

- R⁰: F, CN, einen unsubstituierten oder einen einfach durch CN, Halogen oder CF₃ substituierten Alkyl- oder Alkenylrest mit bis zu 15 C-Atomen, wobei in diesen Resten auch eine oder mehrere CH₂-Gruppen jeweils unabhängig voneinander durch -S-, -O-, -CO-, -CO-O-, -O-CO- oder -O-CO-O- so ersetzt sein können, daß S- und/oder O-Atome nicht direkt miteinander verknüpft sind,
- Z¹ und Z²: jeweils unabhängig voneinander -CH₂CH₂-, -C≡C-, -CH₂O-, -OCH₂-, -CO-O-, -O-CO-, -CH=N-, -N=CH-, -CH₂S-, -SCH₂-, eine Einfachbindung oder eine Alkylengruppe mit 3 bis 6 C-Atomen, worin auch eine CH₂-Gruppe durch -O-, -CO-O-, -O-CO-, -CHHalogen- oder -CHCN- ersetzt sein kann,
und
- A¹ und A²: jeweils unabhängig voneinander einen
a) trans-1,4-Cyclohexylenrest, worin auch eine oder mehrere nicht benachbarte CH₂-Gruppen durch -O- und/oder -S- ersetzt sein können,
b) 1,4-Phenylenrest, worin auch eine oder zwei CH-Gruppen durch N ersetzt sein können,
c) Rest aus der Gruppe 1,3-Cyclobutylen, 1,3-Bicyclo(1,1,1)pentylen, 1,4-Cyclohexenylen, 1,4-Bicyclo(2,2,2)octylen, Piperidin-1,4-diyl, Naphthalin-2,6-diyl, Decahydronaphthalin-2,6-diyl und 1,2,3,4-Tetrahydronaphthalin-2,6-diyl
wobei die Reste (a) und (b) durch CN oder F substituiert sein können, und
- m: 0, 1 oder 2
bedeuten.

Die nach dem erfindungsgemäßen Verfahren hergestellten ortho-Halogenaryl-Derivate umfassen Mono-, Di-, Tri- und Tetra-Halogenphenyl-Derivate sowie Penta-Halogenphenyl-Derivate.

Besonders bevorzugt ist eine Ausführungsform der Erfindung, wobei die durch Metallierung erhaltenen Arylmetallverbindungen mit einem Metallhalogenid wie z.B. ZnCl₂ oder ZnBr₂, oder anderen Metallverbindungen, wie z.B. Ti(OR³)₄, vorzugsweise Titantetraisopropylat, Titantetramethylat, Titantetraethylat oder Titantetra-n-propylat umgesetzt werden. Die durch diese Transmetallierung erhaltenen Verbindungen sind in der Regel temperaturstabiler als die Ausgangsmaterialien und können ebenfalls mit Elektrophilen umgesetzt werden.

Daneben können nach dem erfindungsgemäßen Verfahren auch 2-Halogenpyridin-3-yl-Derivate hergestellt werden. Ob neben den Fluorsubstituenten weitere Substituenten am aromatischen Ring vorhanden sind, ist bei der Durchführung des erfindungsgemäßen Verfahrens unkritisch. Als weitere Substituenten seien beispielsweise Alkyl-, Alkenyloder Alkoxygruppen, Chlor und Brom oder mesogene Gruppen genannt. Daneben können die fluorierten aromatischen Ringe auch Bestandteile von kondensierten Ringsystemen sein, wie z.B. von Naphthalinen, Di- und Tetrahydronaphthalinen oder von 2,3,4,5-Tetrahydro-1H-3-benzazepin-Derivaten.

Der Einfachheit halber bedeuten im folgenden Phe eine 1,4-Phenylengruppe, worin auch eine oder zwei CH-Gruppen durch N ersetzt sein können, wobei eine 1,4-Phenylengruppe auch durch ein oder zwei Halogenatome substituiert sein kann, ArF eine fluorierte 1,4-Phenylengruppe der Formel 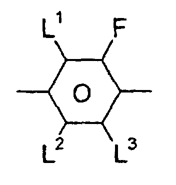 wobei L¹, L² und L³ jeweils unabhängig voneinander H oder F bedeuten.

Cyc bedeutet einen trans-1,4-Cyclohexylenrest, worin auch eine oder mehrere nicht benachbarte CH₂-Gruppen durch -O- ersetzt sein können.

E bedeutet eine Gruppe, welche durch die erfindungsgemäße Reaktion eingeführt wurde.

Vorzugsweise werden Ketone, Carbonsäureamide oder Aldehyde als Elektrophil verwendet.

Bevorzugte Elektrophile sind die folgenden Verbindungen der Formel IIIa bis IIIq:

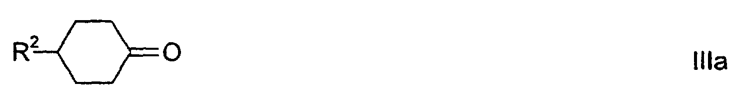

R²-CHO IIIb

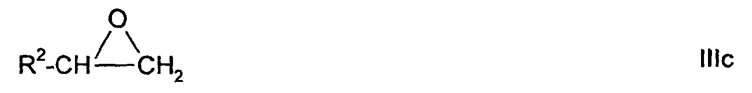

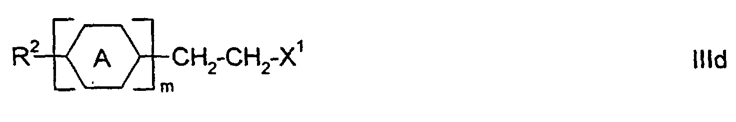

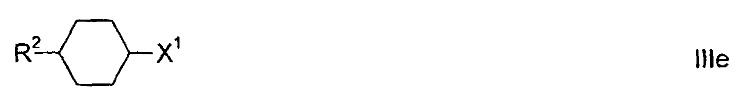

R²-CH₂-X¹ IIIf

R³-CO-R⁴ IIIg

(R²)₂N-CHO IIIh

CO₂ IIIi

Halogene IIIj

Ti(OR³)₃ IIIk

ZnCl₂ IIIl

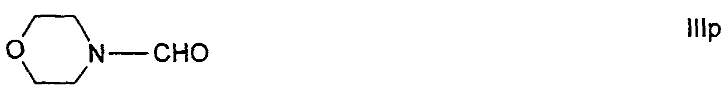

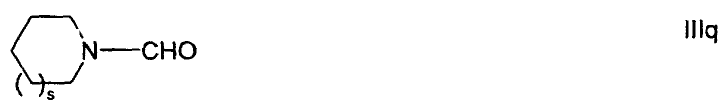

worin R² Alkyl mit 1 bis 15 C-Atome oder eine der Formel II entsprechende mesogene Gruppe bedeutet, 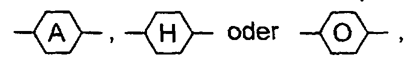 m 1 oder 2 und X¹ Cl, Br, Jod, eine Toluol- oder Benzolsulfonsäuregruppe oder eine Perfluoralkylsulfonsäuregruppe bedeutet. Halogene bedeutet vorzugsweise F, Cl, Br, I, insbesondere Br oder I. R³ und S weisen die oben angegebene Bedeutung auf.

Silylierungsreagenzien sind die Verbindungen der Formel IIIm Sl-L, worin Sl die gegebene Bedeutung besitzt und L eine Abgangsgruppe darstellt, insbesondere Verbindungen der Formeln IIIm1 bis IIIm8:

(CH₃)₃Si-Cl IIIm1

(CH₃)SiBr IIIm2

(CH₃)₃SiJ IIIm3

(CH₃)₃SiOSO₂CF₃ IIIm4

(CH₃)₂(tert.-C₄H₉)SiCl IIIm5

(C₆H₅)₂(tert.-C₄H₉)SiCl IIIm6

(C₂H₅)₃SiCl IIIm7

(I-C₃H₇)₃SiCl IIIm8

Zur Herstellung der Verbindungen der Formel I, worin E B(OR³)(OR⁴) bedeutet, eignen sich vorzugsweise Trialkylborate der Formel IIIn1 B(OR³)₂(OR⁴).

Insbesondere bevorzugt werden für das erfindungsgemäße Verfahren die Elektrophile der Formeln IIIa1 bis IIIn1 eingesetzt:

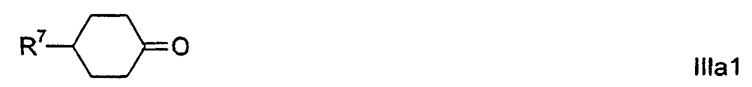

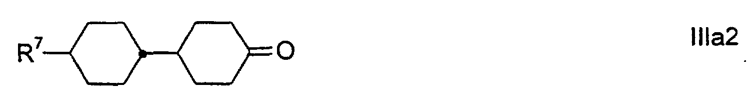

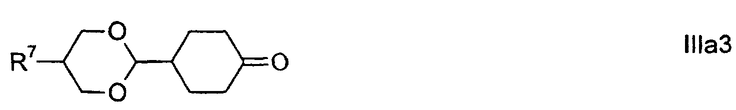

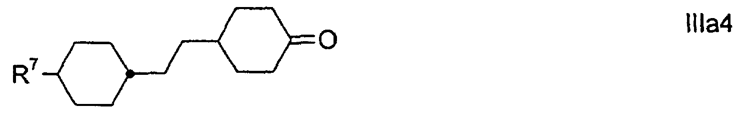

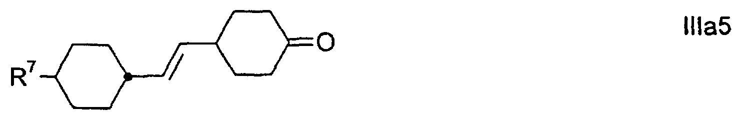

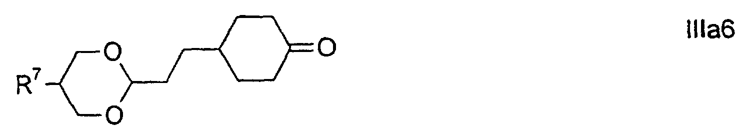

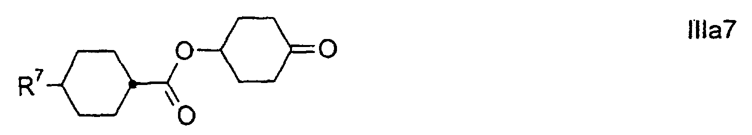

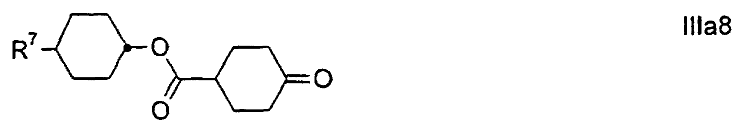

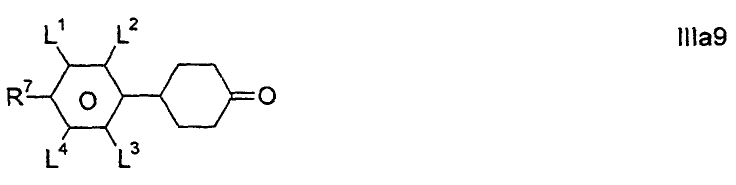

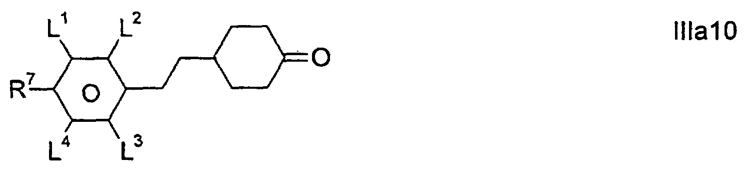

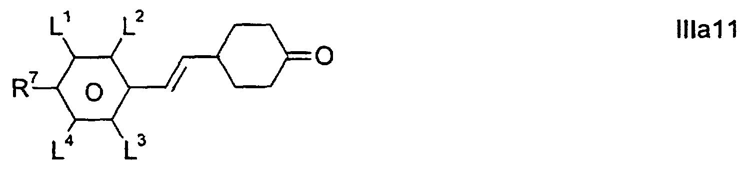

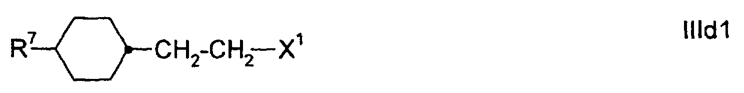

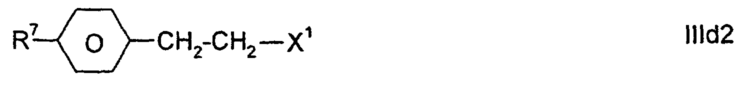

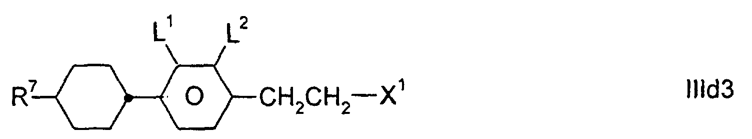

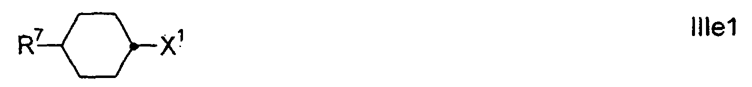

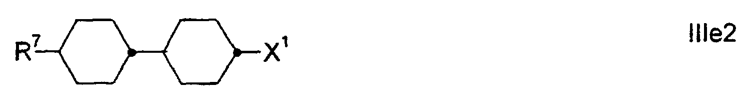

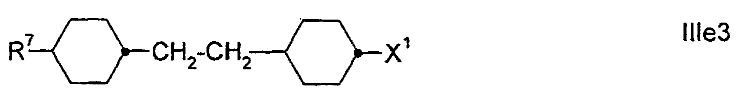

(CH₃)N-CHO IIIh1

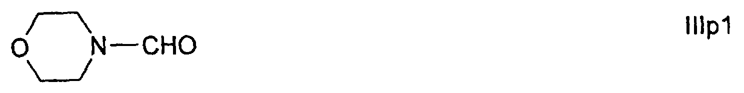

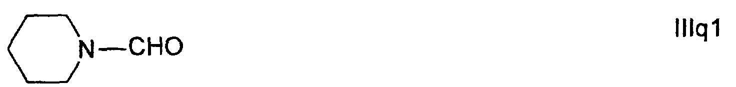

(H₃C)₃SiCl IIIm1

(H₃C)₂ (tert.-C₄H₉)SiCl IIIm5

B(OR³)₂(OR⁴) IIIn1

worin R⁷ vorzugsweise einen Alkyl, Alkoxy, Alkenyl oder Alkenyloxyrest mit bis zu 12 C-Atomen und L¹, L², L³ und L⁴ H oder F bedeutet.

Weitere bevorzugte Elektrophile für das erfindungsgemäße Verfahren sind die Ketone der Formel IIIo 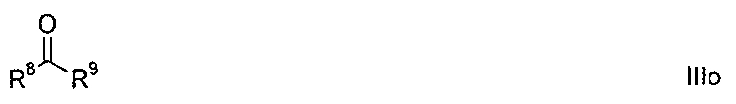 worin
R⁸ und R⁹ unabhängig voneinander einen unsubstituierten oder einen einfach durch CN, Halogen oder CF₃ substituierten Alkyl- oder Alkenylrest mit bis zu 15 C-Atomen bedeuten, wobei in diesen Resten auch eine oder mehrere CH₂-Gruppen jeweils unabhängig voneinander durch -S-, -O-, A, -CO-, -CO-O-, O-CO- oder -O-CO-O so ersetzt sein können, daß -Sund/oder -O-Atome nicht direkt miteinander verknüpft sind.

A bedeutet jeweils unabhängig voneinander einen
(a) trans-1,4-Cyclohexylenrest, worin auch eine oder mehrere nicht benachbarte CH₂-Gruppen durch -O- und/oder -S- ersetzt sein können.
(b) 1,4-Phenylenrest, worin auch eine oder zwei CH-Gruppen durch N ersetzt sein können.
(c) Rest aus der Gruppe 1,3-Cyclobutylen, 1,3-Bicyclo(1,1,1)pentylen, 1,4-Cyclohexenylen, 1,4-Bicyclo(2,2,2)octylen, Piperidin-1,4-diyl,
wobei die Reste (a), (b) und (c) ein- oder mehrfach durch R⁸, R⁹, CN oder Halogen substituiert sein können.

Insbesondere bevorzugt werden durch das erfindungsgemäße Verfahren die Verbindungen der Formeln IV1 bis IV10 metalliert. 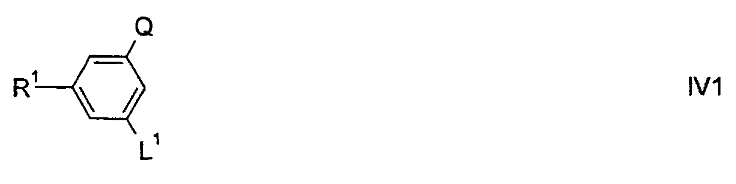 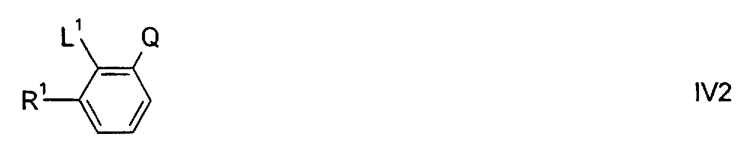 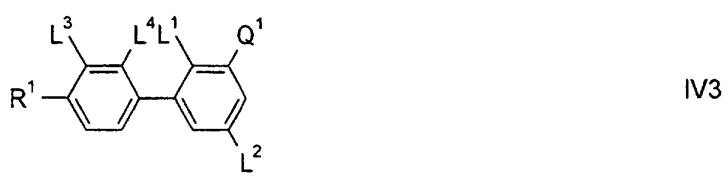 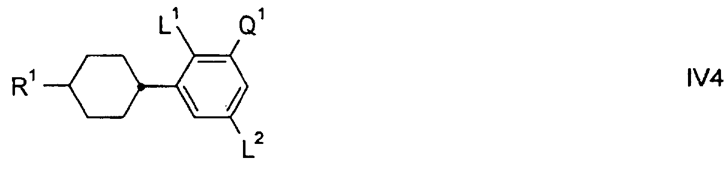 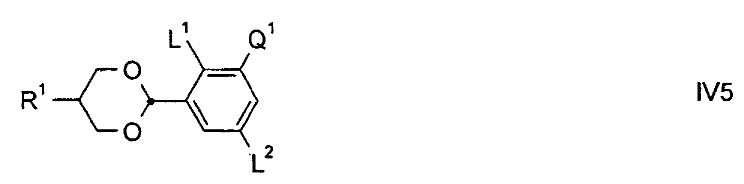 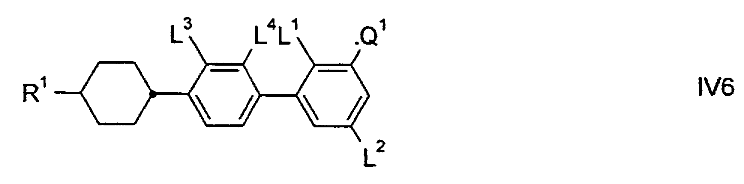 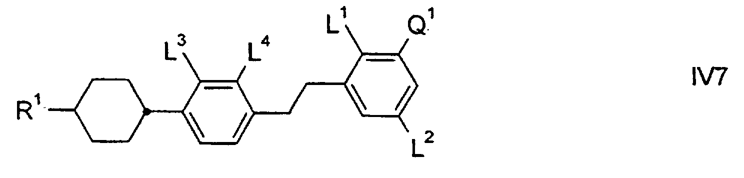 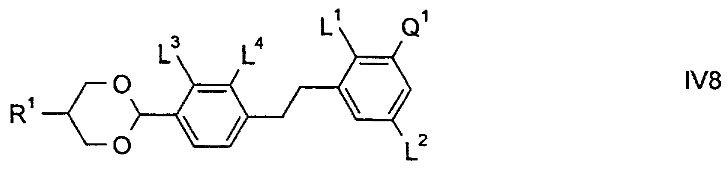 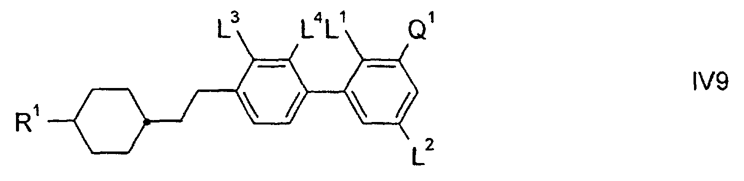 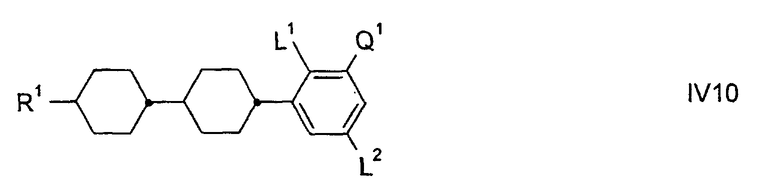 worin Q und R¹ die oben angegebene Bedeutung aufweist und L¹, L², L³ und L⁴ unabhängig voneinander H oder F bedeutet. Q¹ bedeutet F oder Cl, insbesondere F.

Vorzugsweise bedeutet nur einer der Reste L¹ und L² H und der andere F.

Die nach dem erfindungsgemäßen Verfahren hergestellten Verbindungen der Formel I umfassen diejenigen der Formeln la bis li:

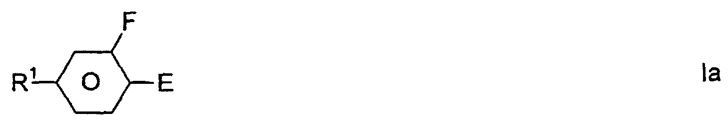

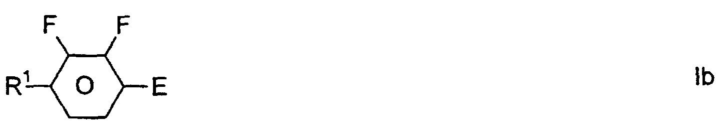

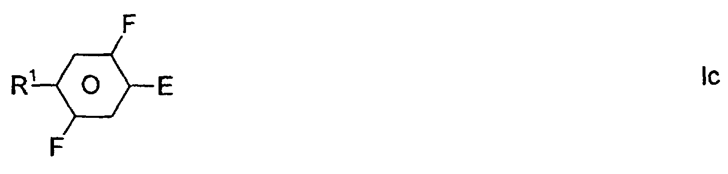

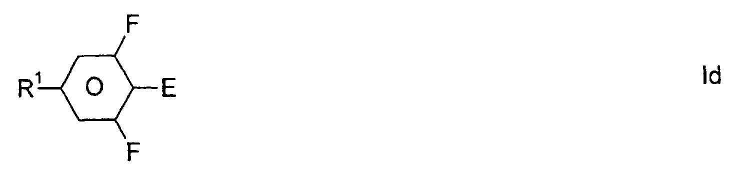

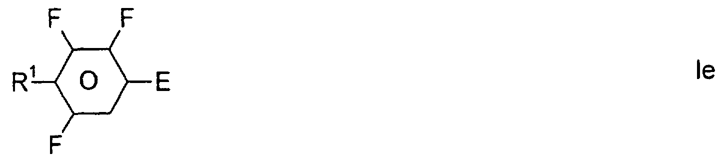

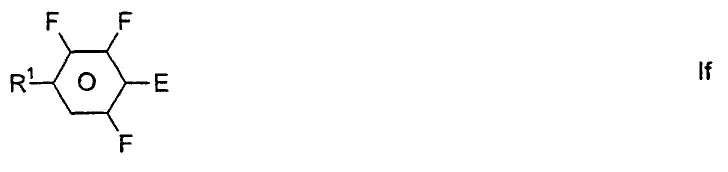

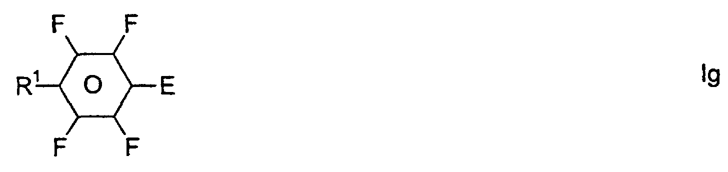

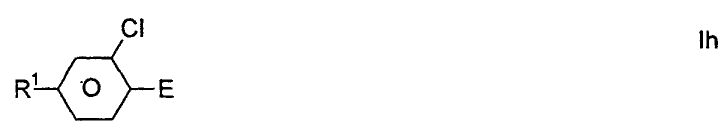

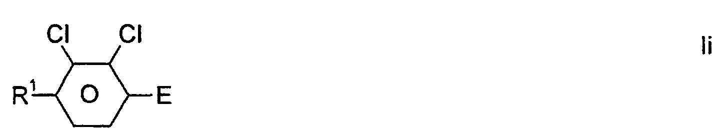

Davon sind die Verbindungen der Formeln Ia, Ib, Id und Ig besonders bevorzugt. In den genannten Verbindungen der Formeln Ia bis li bedeutet R¹ vorzugsweise H, Alkyl oder Alkoxy mit jeweils 1 bis 12 C-Atomen oder ein mesogener Rest, besonders bevorzugt werden nach dem erfindungsgemäßen Verfahren die Verbindungen der Formel Ib, worin R¹ H oder Alkoxy mit 1 bis 12, insbesondere mit 2 bis 4 C-Atomen bedeutet.

Die Verbindungen der Formeln Ib, le, If und Ig eignen sich besonders als Zwischenprodukte zur Herstellung von Flüssigkristallen mit einer 2,3-Difluor-1,4-phenylen bzw. 2,3-Difluor-1,4-phenylenoxy-Struktureinheit. Die Verbindungen der Formel I, welche einen mesogenen Rest der Formel II aufweisen, umfassen die bevorzugten Verbindungen der Formeln I1 bis I13:

R^{o}-A¹-ArF-E I1

R^{o}-A¹-Z¹-ArF-E I2

R^{o}-A¹-A²-ArF-E I3

R^{o}-A¹-A²-Z²-ArF-E I4

R^{o}-A¹-Z¹-A²-ArF-E I5

R^{o}-A¹-Z¹-A²-Z²-ArF-E I6

R^{o}-A¹-A²-A²-ArF-E I7

R^{o}-A¹-Z¹-A²-A²-ArF-E I8

R^{o}-A¹-A²-Z²-A²-ArF-E I9

R^{o}-A¹-A²-A²-Z²-ArF-E I10

R^{o}-A¹-Z¹-A²-Z²-A²-ArF-E I11

R^{o}-A¹-Z¹-A²-A²-Z²-ArF-E I12

R^{o}-A¹-A²-Z²-A²-Z²-ArF-E I13

Darunter sind die Verbindungen der Formeln I1, I2, I3, I4 und I7 besonders bevorzugt.

Von den Verbindungen der Formel I1 sind diejenigen der Formeln I1a bis I1c besonders bevorzugt.

Alkyl-Phe-ArF-E I1a

Alkyl-Cyc-ArF-E I1b

Alkoxy-Phe-ArF-E I1c

Von den Verbindungen der Formel I2 sind diejenigen der Formeln I2a bis I2i besonders bevorzugt.

Alkyl-Phe -CH₂CH₂-ArF-E I2a

Alkyl-Phe-CH₂O-ArF-E I2b

Alkyl-Phe-C≡C-ArF-E I2c

Alkoxy-Phe-C≡C-ArF-E I2d

Alkoxy-Phe-CH₂O-ArF-E I2e

Alkoxy-Phe-CH₂CH₂-ArF-E I2f

Alkyl-Cyc-CH₂CH₂-ArF-E I2g

Alkyl-Cyc-CH₂O-ArF-E I2h

Alkyl-Cyc-C≡C-ArF-E I2i

Die folgende Gruppe von Verbindungen umfaßt die besonders bevorzugten Verbindungen I14 bis I28, die nach dem erfindungsgemäßen Verfahren herstellbar sind. 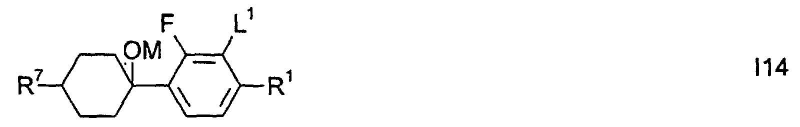 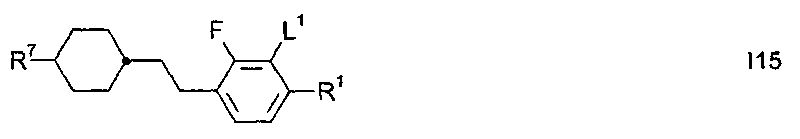 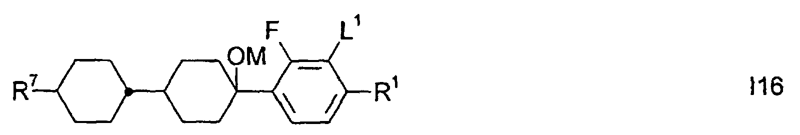 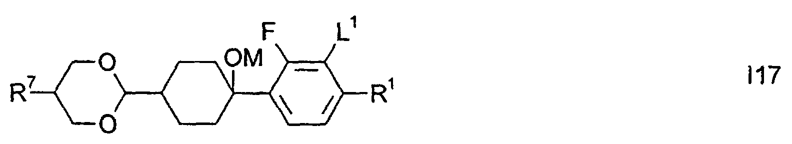 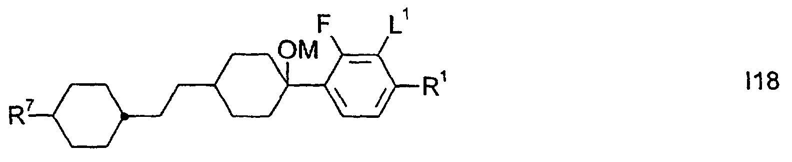 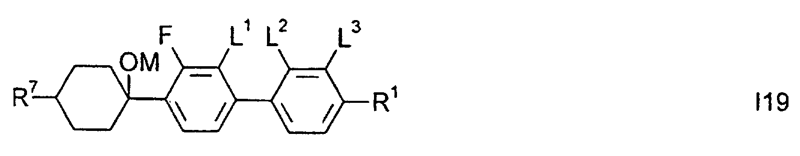 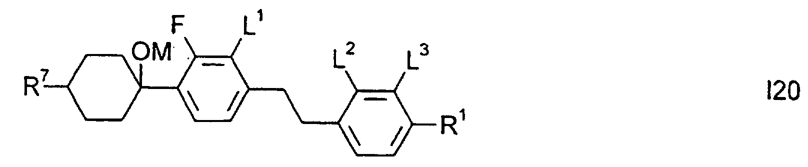 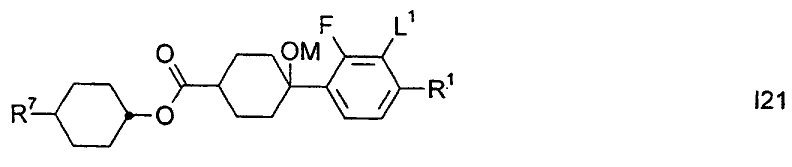 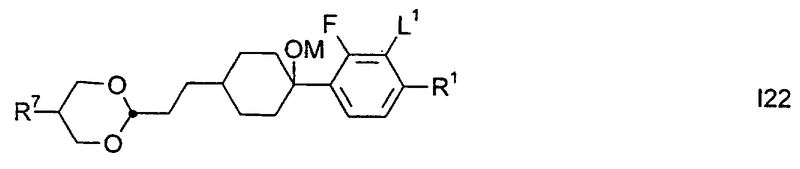 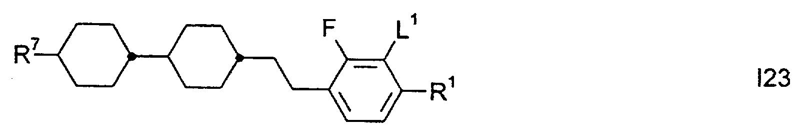 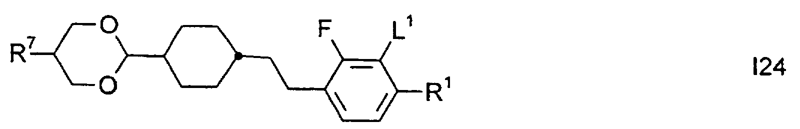 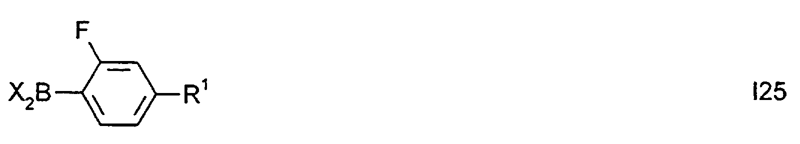 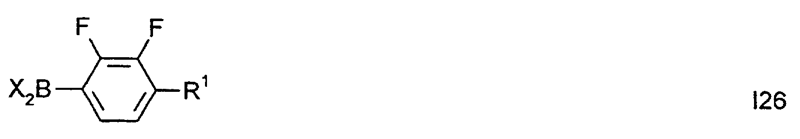 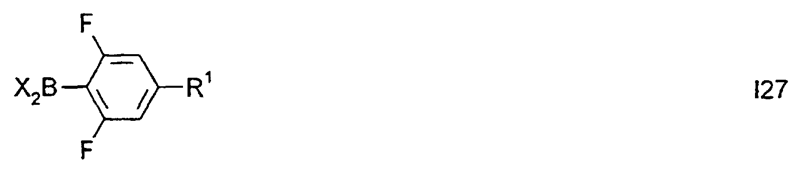 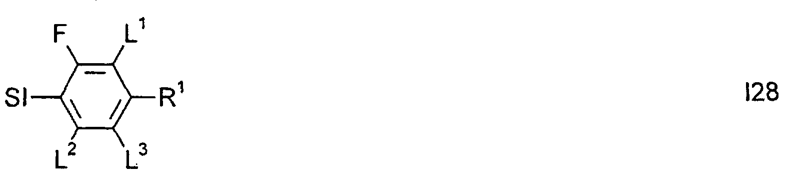 worin R¹, R⁷, BX₂ und SI die oben angegebene Bedeutung annehmen. L¹, L² und L³ bedeuten unabhängig voneinander H oder F.

Das in katalytischer Menge eingesetzte sekundäre Metallamid wird durch Umsetzung mit den entsprechenden Alkyl- oder Arylmetallverbindungen oder einem Metallhydrid vorzugsweise aus den sekundären Aminen der Formel V oder VI erhalten: 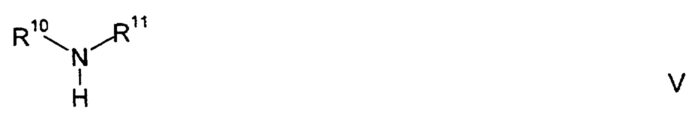 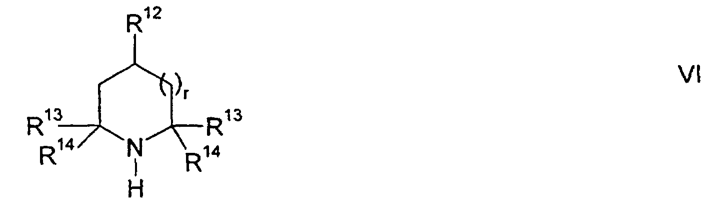 worin
R¹⁰ und R¹¹ Alkyl oder Cycloalkyl mit 1 bis 15 C-Atomen, Aryl oder Trimethylsilyl oder Triethylsilyl bedeutet, R¹² die Bedeutung H, OH, Alkoxy oder Cycloalkoxy mit 1 bis 15 C-Atomen, Trimethylsilyloxy oder Triethylsilyloxy und r die Bedeutung 0, 1 oder 2, vorzugsweise 1 aufweist.

R¹³ und R¹⁴ bedeuten H, Alkyl mit 1 bis 5 C-Atomen oder Aryl, vorzugsweise H, oder Alkyl mit 1 bis 3 C-Atomen, insbesondere bevorzugt H, Methyl, Ethyl oder n-Propyl.

R¹⁰ und R¹¹ bedeuten vorzugsweise Alkyl mit 1 bis 10 C-Atomen, Cycloalkyl oder Trimethylsilyl, insbesondere Methyl, Ethyl, n-Propyl, n-Butyl, Isopropyl, 2-Butyl (= 1-Methylpropyl), Isobutyl (= 2-Methylpropyl), tert.-Butyl, 2-Methylbutyl, Isopentyl (= 3-Methylbutyl), 2-Methylpentyl, 3-Methylpentyl, 4-Methylpentyl, 2-Ethylhexyl, 5-Methylhexyl, 2-Propylpentyl, 6-Methylheptyl, 7-Methyloctyl oder Trimethylsilyl.

R¹² bedeutet vorzugsweise H, OH, Alkoxy mit 1 bis 3 C-Atomen oder Trimethylsilyloxy.

Bevorzugt sind Verbindungen der Formel V, worin R¹⁰ und R¹¹ dieselbe Bedeutung aufweisen. Verbindungen der Formel VI sind bevorzugt, worin R¹³ und R¹⁴ dieselbe Bedeutung aufweisen.

In den bevorzugten Verbindungen der vor- und nachstehenden Formeln sind R¹ und R2 unabhängig voneinander Alkylgruppen mit vorzugsweise 1 bis 10 C-Atomen, Alkoxy-, Alkenylgruppen oder Alkenyloxygruppen mit vorzugsweise jeweils 1 bis 10 C-Atomen.

Besonders bevorzugte Alkylgruppen sind n-Hexyl, n-Pentyl, n-Butyl, i-Butyl, Propyl, i-Propyl, Methyl und Ethyl, insbesondere Methyl; besonders bevorzugte Alkoxygruppen sind n-Hexoxy, n-Pentoxy, n-Butoxy, i-Butoxy, n-Propoxy, i-Propoxy, Methoxy und Ethoxy, insbesondere Methoxy; besonders bevorzugte Alkenylgruppen sind Hexenyl, Pentenyl, Butenyl und Allyl.

In den bevorzugten Verbindungen der vor- und nachstehenden Formeln können die Alkylreste, in denen auch eine CH₂-Gruppe (Alkoxy bzw. Oxaalkyl) durch ein O-Atom ersetzt sein kann, geradkettig oder verzweigt sein. Vorzugsweise haben sie 2, 3, 4, 5, 6, 7, 8, 9 oder 10 C-Atome und bedeuten demnach bevorzugt Ethyl, Propyl, Butyl, Pentyl, Hexyl, Heptyl, Octyl, Nonyl, Decyl, Propoxy, Ethoxy, Butoxy, Pentoxy, Hexoxy, Heptoxy, Octoxy, Nonoxy oder Decoxy, ferner auch Undecyl, Dodecyl, Undecoxy, Dodecoxy, 2-Oxapropyl (= 2-Methoxypentyl), 2-, 3- oder 4-Oxapentyl, 2-, 3-, 4- oder 5-Oxahexyl, 2-, 3-, 4-, 5- oder 6-Oxaheptyl.

A¹ und A2 sind bevorzugt Cyc oder Phe. In den Verbindungen der vor- und nachstehenden Formeln bedeutet Phe vorzugsweise eine 1,4-Phenylen- (Ph), eine ein- oder zweifach durch F oder CN substituierte 1,4-Phenylengruppe (PheX), eine Pyrimidin-2,5-diyl- (Pyr), eine Pyridin-2,5-diyl- (Pyn), eine Pyrazin-3,6-diyl- oder eine Pyridazin-2,5-diyl-Gruppe, insbesondere bevorzugt Ph, PheX, Pyr oder Pyn. Vorzugsweise enthalten die nach dem erfindungsgemäßen Verfahren hergestellten Verbindungen nicht mehr als eine 1,4-Phenylengruppe, worin eine oder zwei CH-Gruppen durch N ersetzt sind. Cyc bedeutet vorzugsweise eine 1,4-Cyclohexylengruppe. Insbesondere bevorzugt sind jedoch Verbindungen der Formel I, worin eine der Gruppen A¹ und A2 eine in 1- oder 4-Position durch CN oder F substituierte 1,4-Cyclohexylengruppe bedeutet und die Nitrilgruppe bzw. das Fluoratom sich in axialer Position befindet, d.h. die Gruppe A¹ bzw. A² die folgende Struktur aufweist:

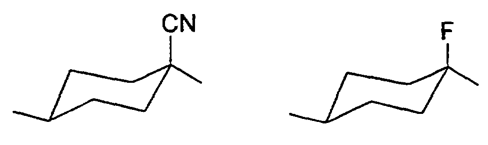

Besonders bevorzugt sind Verbindungen der Formel I und der vorstehenden Teilformeln, die eine Gruppierung -Phe-Phe- enthalten. -Phe-Phe- ist vorzugsweise -Ph-Ph-, Pyr-Phe oder Ph-Pyn. Besonders bevorzugt sind die Gruppen 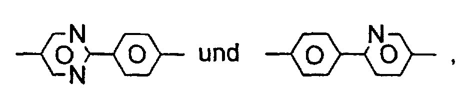 sowie
ferner unsubstituiertes oder ein- oder mehrfach durch Fluor substituiertes 4,4'-Biphenylyl.

Insbesondere bevorzugt sind Verbindungen der Formel I und der nachstehenden Teilformeln, die eine 2,3-Difluor-1,4-phenylengruppe enthalten.

Die Gruppen Z¹ und Z² bedeuten jeweils unabhängig voneinander bevorzugt eine Einfachbindung, in zweiter Linie bevorzugt -C≡C- oder -CH₂CH₂-Gruppen. Insbesondere bevorzugt sind Verbindungen der Formel I, worin die Gruppe Z¹ -CH₂CH₂- bedeutet. Verbindungen der vor- und nachstehenden Formeln mit verzweigten Flügelgruppen R¹ können von Bedeutung sein.

Verzweigte Gruppen dieser Art enthalten in der Regel nicht mehr als zwei Kettenverzweigungen. R¹ ist vorzugsweise eine geradkettige Gruppe oder eine verzweigte Gruppe mit nicht mehr als einer Kettenverzweigung.

Bevorzugte verzweigte Reste sind Isopropyl, 2-Butyl (= 1-Methylpropyl), Isobutyl (= 2-Methylpropyl), tert.-Butyl, 2-Methylbutyl, Isopentyl (= 3-Methylbutyl), 2-Methylpentyl, 3-Methylpentyl, 4-Methylpentyl, 2-Ethylhexyl, 5-Methylhexyl, 2-Propylpentyl, 6-Methylheptyl, 7-Methyloctyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy, 2-Oxa-3-methylbutyl, 3-Oxa-4-methylpentyl.

Der Rest R¹ kann auch ein optisch aktiver organischer Rest mit einem asymmetrischen Kohlenstoffatom sein. Vorzugsweise ist dann das asymmetrische Kohlenstoffatom mit zwei unterschiedlich substituierten C-Atomen, einem H-Atom und einem Substituenten ausgewählt aus der Gruppe Fluor, Alkyl oder Alkoxy mit jeweils 1 bis 5 C-Atomen und CN verknüpft.

Unter den Verbindungen der vorstehenden und nachfolgenden Formeln, sind diejenigen bevorzugt, in denen mindestens einer der darin enthaltenen Reste eine der angegebenen bevorzugten Bedeutungen hat.

Die als Ausgangsstoffe benötigten Verbindungen der Formel IV, 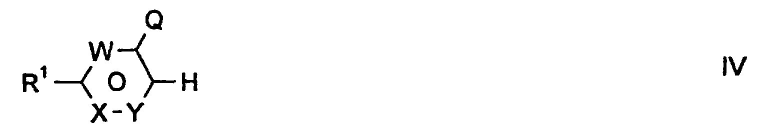 worin Q, R¹, W, X und Y die angegebene Bedeutung besitzen, sind bekannt oder werden nach an sich bekannten Methoden hergestellt, wie sie in der Literatur beschrieben sind (z.B. in den Standardwerken wie Houben-Weyl, Methoden der organischen Chemie, Georg-Thieme-Verlag, Stuttgart), und zwar unter Reaktionsbedingungen die für die genannten Umsetzungen bekannt und geeignet sind. Dabei kann man auch von an sich bekannten, hier nicht näher erwähnten Varianten Gebrauch machen.

Die bei der Reaktion von Arylmetallverbindungen mit Elektrophilen wie Ketonen, Aldehyden oder Oxiranen entstehenden Metallalkoxide werden bei wäßriger Aufarbeitung in die entsprechenden Alkohole überführt, die nach bekannten Methoden weiterverarbeitet werden können. Es ist ebenso möglich, die Metallalkoxide direkt nach bekannten Methoden weiterzuverarbeiten.

Weitere Verwendungsmöglichkeiten der durch das erfindungsgemäße Verfahren hergestellten Verbindungen sind z.B. in EP 440082 beschrieben.

Die folgenden Schemata geben bevorzugte Weiterverarbeitungsmöglichkeiten wieder:

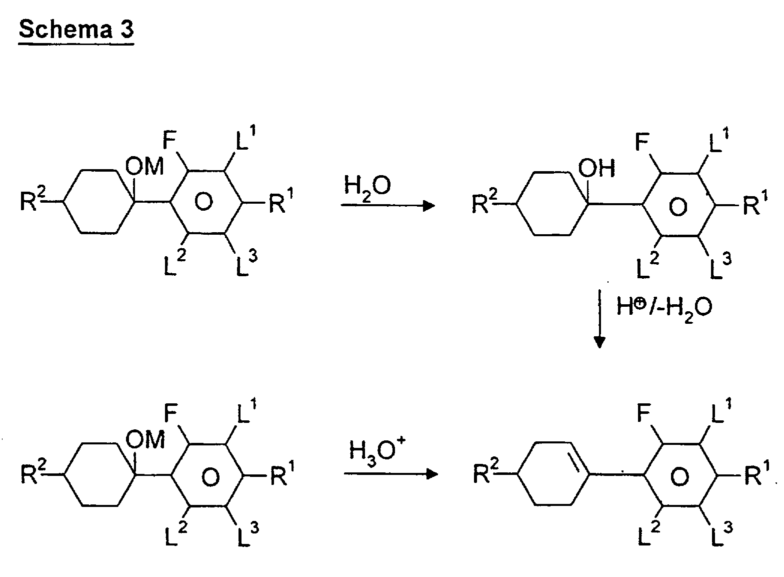

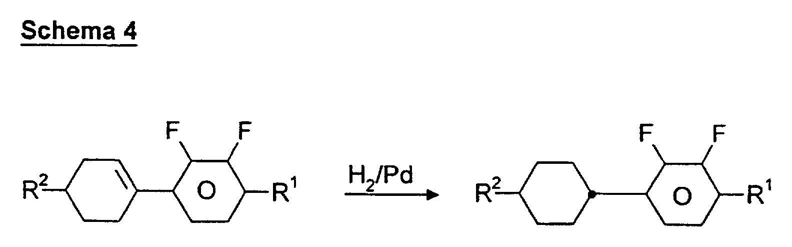

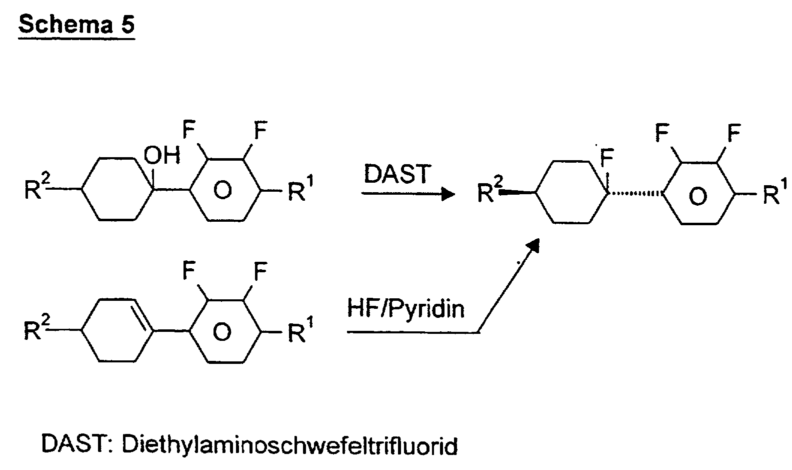

Bevorzugt ist das erfindungsgemäße Verfahren zur Herstellung von ortho-substituierten Aryllithiumverbindungen, Arylkaliumverbindungen oder Arylnatriumverbindungen und deren Umsetzung mit Elektrophilen, insbesonderere zur Herstellung von ortho-substituierten Aryllithiumverbindungen und deren Umsetzung mit Elektrophilen.

Die Reaktionsdurchführung des erfindungsgemäßen Verfahrens ist einfach, wobei zunächst die ortho-substituierten Arylmetallverbindungen bevorzugt in der Weise hergestellt werden, daß man die entsprechenden Aromaten und eine katalytische Menge eines sekundären Amins bei Temperaturen von -100 °C bis +100 °C, vorzugsweise -80 °C bis +40 °C, insbesondere bei -35 °C bis 0 °C mit Alkyl- oder Arylmetallverbindungen oder Metallhydriden umsetzt. Die gebildeten ortho-substituierten Arylmetallverbindungen werden anschließend vorzugsweise bei derselben oder einer höheren Temperatur mit einem Elektrophil umgesetzt.

Vorzugsweise beträgt das molare Verhältnis von zu deprotonierendem Aromaten zur Alkyl- oder Arylmetallverbindung oder zum Metallhydrid, 1 zu 1 bis 1 zu 5, vorzugsweise 1 zu1 bis 1 zu 2, insbesondere von 1 zu 1 bis 1 zu 1.2.

Unter einer katalytischen Menge des Amins wird vorzugsweise 0.1 bis 90 mol%, insbesondere 0.2 bis 30 mol% und ganz besonders bevorzugt 1 bis 15 mol% bezogen auf die zu deprotonierende Verbindung verstanden.

Vorzugsweise wird die gebildete ortho-substituierte Arylmetallverbindung mit einem Überschuß an Elektrophil umgesetzt. Insbesondere bevorzugt beträgt das molare Verhältnis dieser Arylmetallverbindung zum Elektrophil 1 zu 1 bis 1 zu 10, vorzugsweise 1 zu1 bis 1 zu 2.

Die Ausgangsstoffe, d. h. zu metallierender Aromat, Alkyl- oder Arylmetallverbindung oder Metallhydrid und auch das Elektrophil und das sekundäre Amin werden vorzugsweise in inerten Lösungsmitteln gelöst oder suspendiert, die konventionell für Umsetzungen mit starken Basen in Betracht kommen, wie z.B. Ether wie Diethylether, Tetrahydrofuran oder Methyltert.-Butylether, Kohlenwasserstoffe wie Pentan, Hexan, Heptan, Benzol, Toluol, Xylol oder Cyclohexan oder Gemische der genannten Lösungsmittel. Diesen Lösungsmitteln können auch Cosolventien, wie z.B. Hexamethylphosphorsäuretriamid (HMPT), Tetramethylethylendiamin (TMEDA), Dimethylpropylenharnstoff (DMPU) oder Kronenether, wie 18-Crown-6, zugesetzt werden. Die Lösungsmittelmenge ist nicht kritisch, im allgemeinen können 100 bis 1000 g Lösungsmittel je Mol der zu lösenden Verbindungen verwendet werden.

Als Alkyl- oder Arylmetallverbindungen finden vorzugsweise die üblicherweise in der organischen Chemie gebräuchlichen Lithiumverbindungen Verwendung (z.B. House: Modern Synthetic Reactions, 2nd Ed., Benjamin 1972, 547). Besonders geeignete Alkyl- und Aryllithiumverbindungen sind n-Butyllithium, sec.-Butyllithium, tert.-Butyllithium, Methyllithium, Ethyllithium, n-Propyllithium, i-Propyllithium, Hexyllithium oder Phenyllithium. Es können aber auch alle anderen bekannten und hier nicht explizit genannten Alkyl- und Aryllithiumverbindungen Verwendung finden. Alkyllithiumverbindungen sind bevorzugt. Es können aber auch andere Alkyl- und Arylmetallverbindungen wie z.B. Phenylnatrium oder Phenylkalium verwendet werden. Obwohl die Alkyl- und Aryllithiumverbindungen bevorzugt sind, ist es ebenfalls möglich, z.B. Alkylkalium-Verbindungen, die vorzugsweise in situ aus Kalium-tert.-butanolat und Alkyllithium hergestellt werden, einzusetzen (z.B. Angew. Chem. Int. Ed. Engl. 12, 508, 1973). Durch zusätzlichen stöchiometrischen oder substöchiometrischen Einsatz von Kalium-tert.-butanolat wird häufig eine weitere Erhöhung der Reaktionsgeschwindigkeit und der Ausbeute beobachtet. Vorzugsweise wird Kalium-tert.-butanolat in einem molaren Verhältnis zum zu deprotonierenden Aromaten von 1 zu 100 bis 1 zu 1, insbesondere von 1 zu 50 bis 1 zu 1 angewandt.

Als Metallhydride kommen vorzugsweise Kaliumhydrid und Natriumhydrid in Betracht.

Sofem substituierte Aryllithiumverbindungen nach dem erfindungsgemäßen Verfahren hergestellt werden sollen, werden bevorzugt Alkyllithiumverbindungen zur Deprotonierung eingesetzt.

Sofern Arylkaliumverbindungen hergestellt werden sollen, werden bevorzugt Alkyllithiumverbindungen in Gegenwart von Kalium-tert.-Butylat oder Kaliumhydrid zur Deprotonierung verwendet. Sofern Arylnatriumverbindungen hergestellt werden sollen, wird vorzugsweise Natriumhydrid eingesetzt.

Für das erfindungsgemäße Verfahren werden katalytische Mengen eines sekundären Amins, vorzugsweise Diisopropylamin, Piperidin, Pyrrolidin oder 2,2,6,6-Tetramethylpiperidin, 2,2,6,6-Tetramethyl-4-methoxypiperidin, 2,2,6,6-Tetramethyl-4-silyloxypiperidin, 2,2,6,6-Tetramethylpiperidinol, 2,2,5,5-Tetramethylpyrrolidin oder Bis(trimethylsilyl)amin verwendet, das durch Zugabe einer Alkyl- oder Arylmetall-Verbindung in das entsprechende Metallamid übergeführt wird. Nach Deprotonierung eines ortho-substituierten Aromaten durch das Metallamid wird das bei der Reaktion zurückgebildete Amin erneut durch gegenwärtige Alkyl- oder Arylmetall-Verbindung in das Metallamid übergeführt.

Das Amin kann sowohl der Metallverbindung als auch dem zu deprotonierenden Aromaten zugemischt werden. Vorzugsweise wird es dem zu deprotonierenden Aromaten zugemischt.

Die Anwendung von katalytischen Mengen des Amins erhöht die Ausbeute an ortho-substituierter Arylmetallverbindung und die Deprotonierungsgeschwindigkeit.

Bevorzugt werden für das erfindungsgemäße Verfahren zur Herstellung von Arylmetallverbindungen durch Deprotonierung solche Aromaten eingesetzt, die ein Wasserstoffatom in ortho-Position zu einem Fluor oder einem Chloratom oder einer Trifluormethoxy-Gruppe aufweisen.

Es ist auch möglich, das erfindungsgemäße Verfahren zur Metallierung von Aromaten in einem Durchfluß-Reaktor durchzuführen. Dies gilt auch für die sich anschließende Umsetzung mit einem Elektrophil. Hierdurch ist es möglich, die gebildete ortho-substituierte Arylmetallverbindung kontiniuierlich mit einem geeigneten Elektrophil umzusetzen.

Das erfindungsgemäße Verfahren kann analoger Weise zu Verfahren ausgeführt werden, die z.B. in EP 440 082 B1 und DE 42 01 308 C1 beschrieben sind. Hierbei wird vorzugsweise das Elektrophil, der Aromat und das sekundäre Amin vorgelegt und die Alkyl- oder Arylmetall-Verbindung oder das Metallhydrid bei Raumtemperatur zugegeben. Die intermediär entstehenden ortho-substituierten Arylmetallverbindungen werden sofort in-situ vom jeweiligen Elektrophil abgefangen, so daß es nicht zu einer Anreicherung der instabilen Komponente kommen kann. Durch die Zugabe katalytischer Mengen eines sekundären Amins ist im Vergleich zu den dort beschriebenen Verfahren häufig eine Ausbeutesteigerung zu erzielen.

Als Elektrophile kommen bevorzugt die genannten Verbindungen der Formeln IIIa bis IIIn 1in Betracht, vorzugsweise Cyclohexanone wie 4-Alkyl-, Alkoxy-, Alkenyl-, Alkenyloxy- oder Cycloalkylcyclohexanone oder 4-Arylcyclohexanone, oder auch einfache aliphatische oder ungesättigte Ketone wie Aceton, Butanon, 2-Pentanon, Methylvinylketon, Diethylketon, 2-Hexanon, 3-Hexanon, Methylisobutylketon, Ethylisopropylketon, Diisopropylketon, Ethylisobutylketon, Isobutylisopropylketon, 2-Heptanon, 3-Heptanon, 4-Heptanon, Diisobutylketon, Methylvinylketon, Mesityloxid, Acetonylaceton, Benzylidenaceton, Dibenzalaceton, Pinacolon, Ethyl-tert.butylketon, Phenylaceton, Acetophenon, Benzophenon, Menthon, Phoron, Ketoglutarsäureester, Levulinsäureester, Diacetonacrylamid, Isomethadon, Normethadon, Pseudoionon, Ionon, Dipipanon, Norpipanon, Teprenon, Hygrin, Cuscohygrin, 3-Indolylaceton, Phenadoxon, Nabumeton oder Solanon, n-Alkylhalogenide mit 1 bis 16 C-Atomen, insbesondere n-Alkylbromide und -jodide, wie z.B. Methyl-, Ethyl-, Propyl-, Butyl-, Pentyl-, Hexyl-, Heptyl-, Octyl- oder Nonylbromid oder Methyl-, Ethyl-, Propyl-, Butyl-, Pentyl-, Hexyl-, Heptyl-, Octyl- oder Nonyljodid, n-Alkanale mit 2 bis 16 C-Atomen, insbesondere Acetaldehyd, Propionaldehyd, Butyraldehyd, Pentanal, Hexanal, Heptanal, Octanal oder Nonanal, Oxirane wie z.B. Oxiran, 2-Methyloxiran, 2-Ethyloxiran, 2-Propyloxiran, 2-Butyloxiran, 2-Pentyloxiran, 2-Hexyloxiran oder 2-Heptyloxiran.

Als Silylierungsmittel kommen die Verbindungen der Formeln IIIm in Betracht, vorzugsweise Trialkylsilylhalogenide wobei die Alkylgruppen geradkettig oder verzweigt sind und 1 bis 8 C-Atome aufweisen, insbesondere die Verbindungen der Formeln IIIm1 bis IIIm8.

Als Trialkylborate kommen üblicherweise Verbindungen der Formel B(OR³)₂(OR⁴), vorzugsweise B(OR³)₃, wobei R³ vorzugsweise Methyl, Ethyl, Propyl, Butyl oder Isopropyl, insbesondere Methyl oder Isopropyl bedeutet, in Betracht.

In einer bevorzugten Ausführungsform des erfindungsgemäßen Verfahrens wird die Deprotonierung eines Halogen- oder Trifluormethoxyaromaten in der Weise erreicht, daß man zunächst die Lösung des Aromaten mit vorzugsweise 1 bis 50 mol%, insbesondere mit 2 bis 20 mol% des sekundären Amins, das durch Deprotonierung in ein Metallamid übergeführt werden kann, versetzt und diese Mischung in einen Durchfluß-Reaktor in einem definierten Massen- oder Volumenstrom einleitet. Als Base dient vorzugsweise eine Lösung einer Alkyllithiumverbindung, die vorzugsweise in einem Massen- oder Volumenstrom in den Durchfluß-Reaktor eingeleitet wird, der ein molares Verhältnis der Base zum Aromaten von 1 zu 1 bis 1 zu 2, vorzugsweise von 1 zu 1 bis 1 zu 1.2 einhält. Hierbei wird aus dem zugesetzten Amin intermediär das entsprechende Lithiumamid gebildet, das den Halogen- oder Trimethoxyaromaten deprotoniert und anschließend durch weiteres Lithiumalkan wieder in das Amid übergeführt wird. Nach einer Reaktionsstrecke, die für die vollständige Lithiierung des Aromaten ausreicht, wird eine Lösung des Elektrophils in einem Massen- oder Volumenstrom in den Durchfluß-Reaktor eingeleitet, der ein molares Verhältnis des Elektrophils zum metallierten Aromaten von 1 zu 1 bis 1 zu 0.5, vorzugsweise von 1 zu 1 bis 1 zu 0.8 einhält. Nach Durchlaufen einer weiteren Reaktionsstrecke, in der das Elektrophil mit der Arylmetallverbindung umgesetzt wird, verläßt der Produktstrom den Durchfluß-Reaktor.

Die Aufarbeitung des Reaktionsgemisches und die Isolierung der Produkte erfolgt in üblicher Weise, z.B. indem man das Reaktionsgemisch, das bei der Verwendung von Ketonen, Aldehyden oder Epoxiden als Elektrophil die entsprechenden Metallalkoxide als Produkt enthält, auf Wasser und/oder Eis bzw. verdünnte Säure gießt und nach Abtrennen der wäßrigen

Phase die Produkte durch Destillation oder Kristallisation in Form der jeweiligen Alkohole gewinnt.

Bei der Verwendung von Amiden als Elektrophile entstehen zunächst die entsprechenden metallierten Halbaminale, die nach Protonierung in die jeweiligen Aldehyde zerfallen.

Die folgende Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt. Sofern nicht anders angegeben wurden in den Beispielen 1,0 bis 1,2 Äquivalente (bezogen auf eingesetzten Aromaten) des jeweiligen Elektrophils verwendet.

Übliche Aufarbeitung bedeutet: man gibt gegebenenfalls Wasser hinzu, extrahiert mit Methylenchlorid, Diethylether oder Toluol, trennt ab, trocknet die organische Phase, dampft ein und reinigt das Produkt durch Destillation unter reduziertem Druck oder Kristallisation und/oder Chromatographie.

Folgende Abkürzungen werden verwendet
- THF: Tetrahydrofuran
- KOtBu: Kalium-tert.-butylat
- RT: Raumtemperatur
- MTBE: Methyl-tert.-butylether

### Beispiel 1

1,1 kg/h einer 1 M Lösung von 2,3-Difluorphenetol mit 10 mol% 2,2,6,6-Tetramethylpiperidin wurden in einen Durchfluß-Reaktor eingeleitet und mit 0.4 kg/h einer 2.5 M Lösung von Hexyllithium in Hexan bei -35 °C gemischt. Nach Durchlaufen der Reaktionsstrecke wurden 0.28 kg/h einer 4.7 M Lösung von Benzaldehyd in THF zugemischt. Nach Abschluß der Reaktion wurde das Produkt aufgefangen und wie üblich aufgearbeitet, wodurch 2,3-Difluor-4-ethoxy-α-phenylbenzylalkohol erhalten wurde. Der Umsatz bezogen auf die Ausgangsverbindung betrug 97 %.

### Beispiel 2

2,3-Difluorethoxybenzol wurde mit n-Hexyllithium im Rohrreaktor bei -30°C gemischt und nach ca. 15 min Verweildauer mit Benzaldehyd zur Reaktion gebracht. Die Zugabe von 10 mol% 2,2,6,6-Tetramethylpiperidin zum Aromaten erhöhte den Umsatz von ca. 86% auf 99%.

### Beispiel 3

2,3-Difluorethoxybenzol und 10 mol% 2,2,6,6-Tetramethyl-4-piperidinol wurden mit n-Hexyllithium bei ca. -65°C 15 min lang gerührt und dann mit Benzaldehyd zur Reaktion gebracht. Der Umsatz betrug >99%.

### Beispiel 4

2,3-Difluortoluol und 10 mol% 2,2,6,6-Tetramethylpiperidin wurden mit n-Hexyllithium im Rohrreaktor bei -30°C gemischt und nach ca. 15 min Verweildauer mit Benzaldehyd zur Reaktion gebracht. Der Umsatz betrug ca. 96%.

### Beispiel 5

2,3-Difluortoluol wurde mit n-Hexyllithium bei ca. -65°C 1 h lang gerührt und dann mit 4-(4-Ethylcyclohexyl)-cyclohexanon umsetzt. Nach Isolierung und Wasserabspaltung wurde das Alken durch Kristalllisation gereinigt. Die Zugabe von 10 mol% 2,2,6,6-Tetramethylpiperidin zum Aromaten erhöhte die Ausbeute von 72 auf 76%.

### Beispiel 6

1,2-Difluorbenzol und 10 mol% 2,2,6,6-Tetramethylpiperidin wurden mit n-Hexyllithium bei ca. -65°C 15 min lang gerührt und dann mit Benzaldehyd zur Reaktion gebracht. Der Umsatz betrug ca. 95%.

### Beispiel 7

3-(4-Propylcyclohexyl)-fluorbenzol wurde mit n-Hexyllithium bei ca. -70°C 1 h lang gerührt und mit Trimethylsilylchlorid zur Reaktion gebracht. Während unter Zugabe von 10 mol% 2,2,6,6-Tetramethylpiperidin nur 12% Umsatz erzielt wurde, stieg dieser auf 92% bei Zugabe von je 50 mol% 2,2,6,6-Tetramethylpiperidin und 50 mol% KOtBu.

Analog werden nach dem erfindungsgemäßen Verfahren unter Verwendung der entsprechenden Vorstufen folgende Verbindungen erhalten.

### Beispiele 8-11

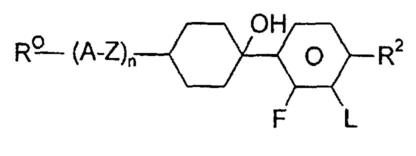

| | R^{o} | (A-Z)ₙ | R² | L |
|---|---|---|---|---|
| (8) | n-Propyl | ― | n-Propyl | F |
| (9) | n-Pentyl | ― | n-Propyl | F |
| (10) | n-Pentyloxy | ― | n-Pentyloxy | F |
| (11) | CH=CH₂ | ― | CH=CH₂ | H |

### Beispiele 12 - 28

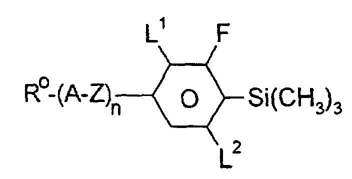

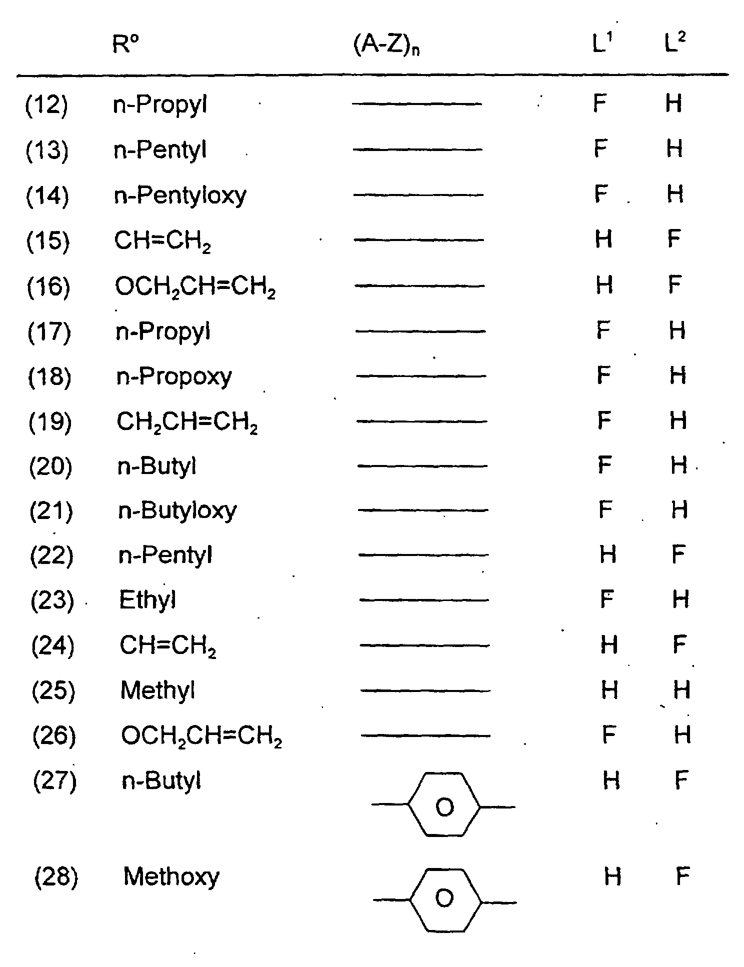

### Beispiele 29 - 34

(29) 4-n-Propyl-2,6-difluorbenzolboronsäure-anhydrid
(30) 4-(4-Propyl-)cyclohexyl)-2,3-difluorbenzolboronsäure-anhydrid
(31) 4-Propyl-2,3-difluorbenzolboronsäure-anhydrid
(32) 4-(4-Ethyl-)phenyl-2,3-difluorbenzolboronsäure-anhydrid
(33) 4-(2-(4-(4-Propyl-)cyclohexyl-)cyclohexyl-)ethyl-2,3-difluorbenzolboronsäure-anhydrid
(34) 4-Ethoxy-2,3-difluorphenylboronsäure-anhydrid

### Beispiel 35

3,5-Difluor-(4-propylcyclohexyl)-benzol und 2 mol% 2,2,6,6-Tetramethylpiperidin wurden mit n-Hexyllithium im Rohrreaktor bei -50 °C gemischt und nach ca. 10 min Verweildauer mit N-Formylpiperidin zur Reaktion gebracht. Der Umsatz betrug > 98 %.

## Patentansprüche

1. Verfahren zur Herstellung von ortho-substituierten Arylmetallverbindungen durch Deprotonierung von Aromaten, die ein Wasserstoffatom in ortho-Position zu mindestens einem Halogenatom, einer Trifluormethoxygruppe, einer Dialkylaminogruppe, einer Nitrilgruppe, einer Alkoxygruppe oder einer Dialkylamidogruppe aufweisen und deren Umsetzung mit entsprechenden Elektrophilen zu den Verbindungen der Formel I, 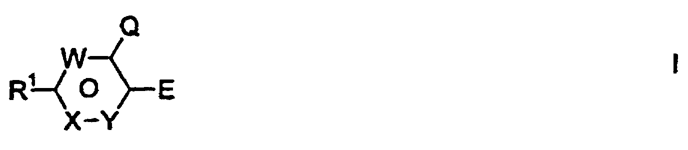 wobei
Q F, Cl, CN, OCF₃, CONR₂, NR₂ oder OR,
R Alkyl mit 1 bis 7 C-Atomen,
R¹ H, F, Cl, Br, CN, Alkyl, Alkenyl, Alkoxy, Alkenyloxy mit jeweils bis zu 18 C-Atomen oder eine mesogene Gruppe,
W, X und Y jeweils unabhängig voneinander CH, CCN, CCI oder CF,
und
E 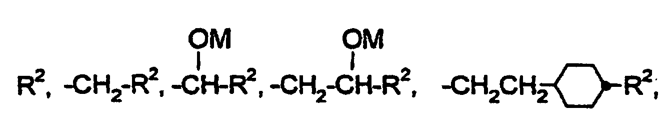 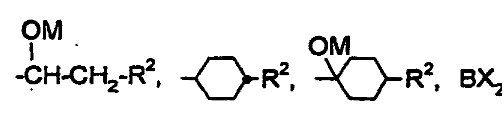 oder SI, 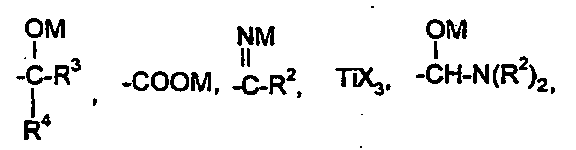 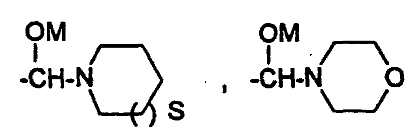 oder ZnX
worin
R² Alkyl, Alkoxy, Alkenyl, Alkenyloxy mit 1 bis 15 C-Atomen oder einen der Gruppe R¹ entsprechenden mesogenen Rest,
M Li, K oder Na,
S O oder 1,
BX₂ einen Trioxatriborinonrest der Formel 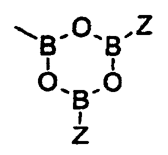 worin Z für 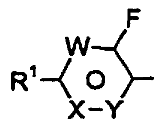 steht oder eine Gruppe der Formel -B(OR³)(OR⁴),
R³ und R⁴ H, Alkyl, Alkenyl oder Cycloalkyl mit jeweils bis zu 10 C-Atomen oder zusammengenommen eine Alkylendiylgruppe der Formel-(CH₂)ₙ- oder -CH₂CHR⁵-CH₂-, worin n 2, 3 oder 4 ist und R⁵ Alkyl, Alkoxy oder Alkenyl mit bis zu 18 C-Atomen oder einen der Formel II entsprechenden mesogenen Rest, und
Sl eine Trihydrocarbylsilylgruppe der Formel -Si(R⁶)₃ worin R⁶ jeweils unabhängig voneinander aliphatischer, cycloaliphatischer, araliphatischer oder aromatischer Rest ist,
TiX₃ einen Rest der Formel TiBr₃, TiCl₃ oder Ti(OR₃)₃
ZnX einen Rest der Formel ZnBr, ZnCl, ZnR³ oder ZnOR³
bedeuten, **dadurch gekennzeichnet, daß** die Deprotonierung der Aromaten durch Anwendung von Alkyl- oder Arylmetallverbindungen oder Metallhydriden in Gegenwart einer katalytischen Menge eines sekundären Metallamids erfolgt.

2. Verfahren nach Anspruch 1, **dadurch gekennzeichnet, daß** R¹ eine mesogene Gruppe der Formel II bedeutet, wobei
R^{o}-A¹-Z¹-(A²-Z²)-ₘ II
R^{o} F, CN, einen unsubstituierten oder einen einfach durch CN, Halogen oder CF₃ substituierten Alkyl- oder Alkenylrest mit bis zu 15 C-Atomen, wobei in diesen Resten auch eine oder mehrere CH₂-Gruppen jeweils unabhängig voneinander durch -S-, -O-, -CO-, -CO-O-, -O-CO- oder -O-CO-O- so ersetzt sein können, daß S- und/oder O-Atome nicht direkt miteinander verknüpft sind,
Z¹ und Z² jeweils unabhängig voneinander ―CH₂CH₂-, -C≡C-, -CH₂O-, -OCH₂-, -CO-O-, -O-CO-, -CH=N-, -N=CH-, -CH₂S-, -SCH₂-, eine Einfachbindung oder eine Alkylengruppe mit 3 bis 6 C-Atomen, worin auch eine CH₂-Gruppe durch -O-, -CO-O-, -O-CO-, -CHHalogen- oder -CHCN- ersetzt sein kann,
und
A¹ und A² jeweils unabhängig voneinander einen
a) trans-1,4-Cyclohexylenrest, worin auch eine oder mehrere nicht benachbarte CH₂-Gruppen durch -O- und/oder -S- ersetzt sein können,
b) 1,4-Phenylenrest, worin auch eine oder zwei CH-Gruppen durch N ersetzt sein können,
c) Rest aus der Gruppe 1,3-Cyclobutylen, 1,3-Bicyclo(1,1,1)pentylen, 1,4-Cyclohexenylen, 1,4-Bicyclo(2,2,2)octylen, Piperidin-1,4-diyl, Naphthalin-2,6-diyl, Decahydronaphthalin-2,6-diyl und 1,2,3,4-Tetrahydronaphthalin-2,6-diyl
wobei die Reste (a) und (b) durch CN oder F substituiert sein können, und
m 0,1 oder 2
bedeuten.

3. Verfahren nach einem der vorhergehenden Ansprüche, **dadurch gekennzeichnet, daß** das sekundäre Metallamid aus den sekundären Aminen der Formel V oder VI erhalten wird: 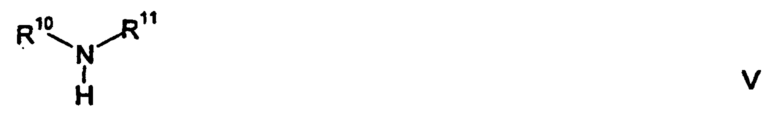 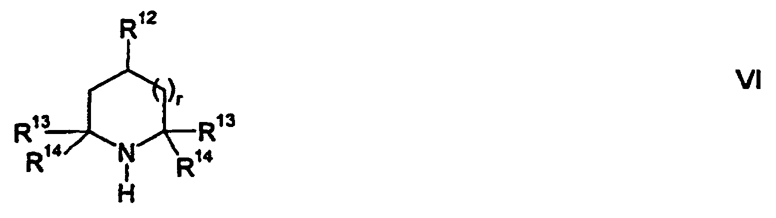 worin
R¹⁰ und R¹¹ Alkyl oder Cycloalkyl mit 1 bis 15 C-Atomen, Aryl oder Trimethylsilyl oder Triethylsilyl bedeutet, R¹² die Bedeutung H, OH, Alkoxy oder Cycloalkoxy mit 1 bis 15 C-Atomen, Trimethylsilyloxy oder Triethylsilyloxy und r die Bedeutung 0, 1 oder 2 aufweist und R¹³ und R¹⁴ H, Alkyl mit 1 bis 5 C-Atomen oder Aryl bedeuten.

4. Verfahren nach einem der vorhergehenden Ansprüche, **dadurch gekennzeichnet, daß** zur Deprotonierung Alkyl- oder Aryllithiumverbindungen, Kaliumhydrid oder Natriumhydrid eingesetzt werden.

5. Verfahren nach einem der vorhergehenden Ansprüche, **dadurch gekennzeichnet, daß** die Deprotonierung in Gegenwart von Kaliumtert.-butylat erfolgt.

6. Verfahren nach einem der vorhergehenden Ansprüche, wobei man die Ausgangsstoffe bei Temperaturen von -80 °C bis +40 °C zur Reaktion bringt.

## Claims

1. Process for the preparation of ortho-substituted arylmetal compounds by deprotonation of aromatics having a hydrogen atom in the ortho-position to at least one halogen atom, a trifluoromethoxy group, a dialkylamino group, a nitrile group, an alkoxy group or a dialkylamido group and reaction thereof with corresponding electrophiles to give the compounds of the formula I 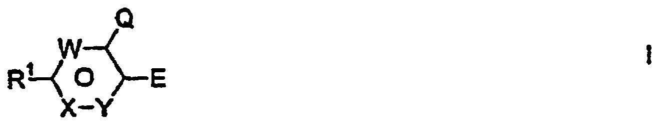 where
Q denotes F, CI, CN, OCF₃, CONR₂, NR₂ or OR,
R denotes alkyl having 1 to 7 C atoms,
R¹ denotes H, F, Cl, Br, CN, alkyl, alkenyl, alkoxy, alkenyloxy, each having up to 18 C atoms or a mesogenic group,
W, X and Y each, independently of one another, denote CH, CCN, CCI or CF,
and
E denotes 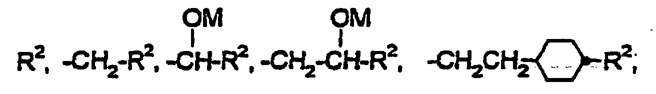 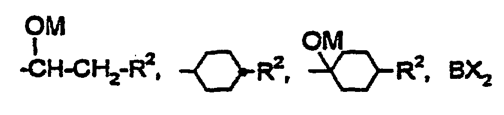
or SI, 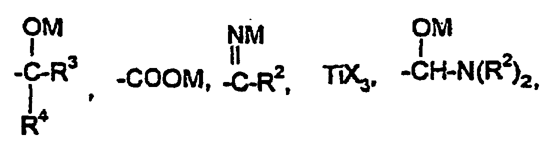 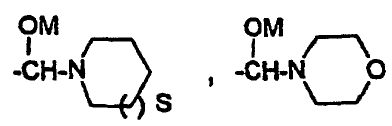 or ZnX in which
R² denotes alkyl, alkoxy, alkenyl, alkenyloxy having 1 to 15 C atoms or a mesogenic radical corresponding to the group R¹,
M denotes Li, K or Na,
S denotes 0 or 1,
BX₂ denotes a trioxatriborinone radical of the formula 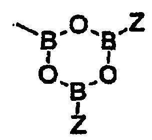 in which Z denotes 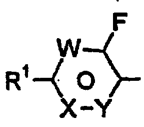 or a group of the formula -B(OR³)(OR⁴),
R³ and R⁴ denote H, alkyl, alkenyl or cycloalkyl, each having up to 10 C atoms, or taken together denote an alkylenediyl group of the formula -(CH₂)ₙ- or -CH₂CHR⁵-CH₂-, in which n is 2, 3 or 4 and R⁵ denotes alkyl, alkoxy or alkenyl having up to 18 C atoms or a mesogenic radical conforming to the formula II, and
Sl denotes a trihydrocarbylsilyl group of the formula -Si(R⁶)₃, in which R⁶ in each case, independently of one another, denotes an aliphatic, cycloaliphatic, araliphatic or aromatic radical,
TiX₃ denotes a radical of the formula TiBr₃, TiCl₃ or Ti(OR₃)₃,
ZnX denotes a radical of the formula ZnBr, ZnCl, ZnR³ or ZnOR³,
**characterised in that** the deprotonation of the aromatics is carried out using alkyl- or arylmetal compounds or metal hydrides in the presence of a catalytic amount of a secondary metal amide.

2. Process according to Claim 1, **characterised in that** R¹ denotes a mesogenic group of the formula II, where
R^{o}-A¹-Z¹-(A²-Z²)-ₘ II
R^{o} denotes F, CN, an alkyl or alkenyl radical having up to 15 C atoms which is unsubstituted or monosubstituted by CN, halogen or CF₃, where, in addition, one or more CH₂ groups in these radicals may each, independently of one another, be replaced by -S-, -O-, -CO-, -CO-O-, - O-CO- or -O-CO-O- in such a way that S and/or O atoms are not linked directly to one another,
Z¹ and Z² each, independently of one another, denote -CH₂CH₂-, - C≡C-, -CH₂O-, -OCH₂-, -CO-O-, -O-CO-, -CH=N-, - N=CH-, -CH₂S-, -SCH₂-, a single bond or an alkylene group having 3 to 6 C atoms, in which, in addition, one CH₂ group may be replaced by -O-, -CO-O-, -O-CO-, - CH-halogen- or -CHCN-,
and
A¹ and A² each, independently of one another, denote a
a) trans-1,4-cyclohexylene radical, in which, in addition, one or more non-adjacent CH₂ groups may be replaced by -O- and/or -S-,
b) 1,4-phenylene radical, in which, in addition, one or two CH groups may be replaced by N,
c) radical from the group 1,3-cyclobutylene, 1,3-bicyclo(1,1,1)pentylene, 1,4-cyclohexenylene, 1,4-bicyclo(2,2,2)octylene, piperidine-1,4-diyl, naphthalene-2,6-diyl, decahydronaphthalene-2,6-diyl and 1,2,3,4-tetrahydronaphthalene-2,6-diyl,
where the radicals (a) and (b) may be substituted by CN or F, and
m denotes 0, 1 or 2.

3. Process according to one of the preceding claims, **characterised in that** the secondary metal amide is obtained from the secondary amines of the formula V or VI: 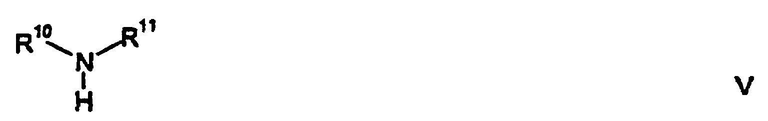 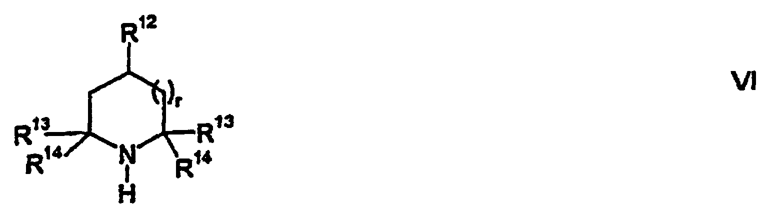 in which
R¹⁰ and R¹¹ denote alkyl or cycloalkyl having 1 to 15 C atoms, aryl or trimethylsilyl or triethylsilyl, R¹² has the meaning H, OH, alkoxy or cycloalkoxy having 1 to 15 C atoms, trimethylsilyloxy or triethylsilyloxy, and r has the meaning 0, 1 or 2, and R¹³ and R¹⁴ denote H, alkyl having 1 to 5 C atoms or aryl.

4. Process according to one of the preceding claims, **characterised in that** the deprotonation is carried out using alkyl- or aryllithium compounds, potassium hydride or sodium hydride.

5. Process according to one of the preceding claims, **characterised in that** the deprotonation is carried out in the presence of potassium tert-butoxide.

6. Process according to one of the preceding claims, in which the starting materials are brought to reaction at temperatures of -80°C to +40°C.

## Revendications

1. Procédé pour la préparation de composés d'arylmétal ortho-substitués par déprotonation d'aromatiques ayant un atome hydrogène dans l'ortho-position avec au moins un atome halogène, un groupe trifluorométhoxy, un groupe dialkylamino, un groupe nitrile, un groupe alkoxy ou un groupe dialkylamido et leur réaction avec des électrophiles correspondants pour donner les composés de la formule I 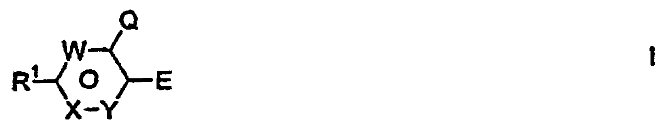 dans laquelle
Q représente F, CI, CN, OCF₃, CONR₂, NR₂ ou OR,
R représente alkyle ayant 1 à 7 atomes C,
R¹ représente H, F, Cl, Br, CN, alkyle, alkényle, alkoxy, alkényloxy, chacun ayant jusqu'à 18 atomes C ou un groupe mésogénique,
W, X et Y chacun, indépendamment les uns des autres, représentent CH, CCN, CCI ou CF,
et
E représente 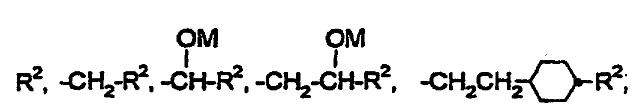 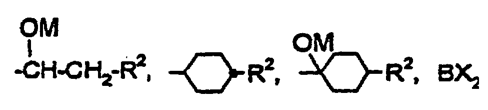
ou SI, 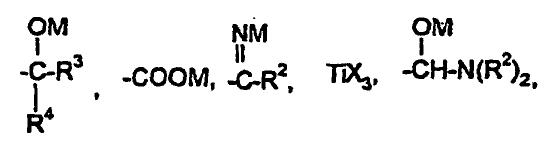 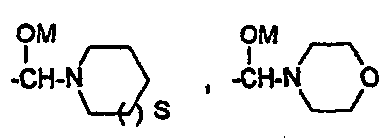 ou ZnX
dans laquelle
R² représente alkyle, alkoxy, alkényle, alkényloxy ayant 1 à 15 atomes C ou un radical mésogénique correspondant au groupe R¹,
M représente Li, K ou Na,
S représente 0 ou 1,
BX₂ représente un radical trioxatriborinone de la formule 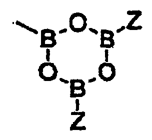 dans laquelle Z représente 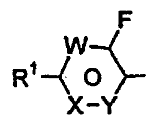 ou un groupe de la formule -B(OR³)(OR⁴),
R³ et R⁴ représentent H, alkyle, alkényle ou cycloalkyle, chacun ayant jusqu'à 10 atomes C, ou pris ensemble représentent un groupe alkylènediyle de la formule -(CH₂)ₙ- ou -CH₂CHR⁵-CH₂-, dans laquelle n vaut 2, 3 ou 4 et R⁵ représente alkyle, alkoxy ou alkényle ayant jusqu'à 18 atomes C ou un radical mésogénique se conformant à la formule II, et
SI représente un groupe trihydrocarbylsilyle de la formule -Si(R⁶)₃, dans laquelle R⁶ dans chaque cas, indépendamment l'un de l'autre, représente un radical aliphatique, cycloaliphatique, araliphatique ou aromatique,
TiX₃ représente un radical de la formule TiBr₃, TiCl₃ ou Ti(OR₃)₃,
ZnX représente un radical de la formule ZnBr, ZnCl, ZnR³ ou ZnOR³,
**caractérisé en ce que** la déprotonation des aromatiques est mise en oeuvre en utilisant des composés alkyle ou arylmetal ou des hydrures de métal en présence d'une quantité catalytique d'un amide de métal secondaire.

2. Procédé selon la revendication 1, **caractérisé en ce que** R¹ représente un groupe mésogénique de la formule II,
R^{o}-A¹-Z¹-(A²-Z²)-ₘ II
dans laquelle
R^{o} représente F, CN, un radical alkyle ou alkényle ayant jusqu'à 15 atomes C qui est non substitué ou mono- substitué par CN, un halogène ou CF₃, dans lequel, en outre, un ou plusieurs groupes CH₂ dans ces radicaux peuvent chacun, indépendamment les uns des autres, être remplacés par -S-, -O-, -CO-, -CO-O-, -O-CO- ou - O-CO-O- de telle sorte que des atomes S et/ou O ne soient pas liés directement l'un à l'autre,
Z¹ et Z² chacun, indépendamment l'un de l'autre, représentent -CH₂CH₂-, -C≡C-, -CH₂O-, -OCH₂-, -CO-O-, -O-CO-, - CH=N-, -N=CH-, -CH₂S-, -SCH₂-, une liaison simple ou un groupe alkylène ayant 3 à 6 atomes C, dans lequel, en outre, un groupe CH₂ peut être remplacé par -O-, -CO-O-, -O-CO-, -CH-halogène- ou -CHCN-,
et
A¹ et A² chacun, indépendamment l'un de l'autre, représentent
a) un radical trans-1,4-cyclohexylène, dans lequel, en outre, un ou plusieurs groupes CH₂ non adjacents peuvent être remplacés par -O- et/ou -S-,
b) un radical 1,4-phénylène, dans lequel, en outre, un ou deux groupes CH peuvent être remplacés par N,
c) un radical choisi parmi le groupe 1,3-cyclobutylène, 1,3-bicyclo(1,1,1)pentylène, 1,4-cyclohexénylène, 1,4-bicyclo(2,2,2)octylène, pipéridine-1,4-diyle, naphthalène-2,6-diyle, décahydronaphthalène-2,6-diyle et 1,2,3,4-tétrahydronaphthalène-2,6-diyle,
dans lesquels les radicaux (a) et (b) peuvent être substitués par CN ou F,
et
m représente 0, 1 ou 2.

3. Procédé selon l'une les revendications précédentes, **caractérisé en ce que** l'amide de métal secondaire est obtenu à partir des amides secondaires de la formule V ou VI: 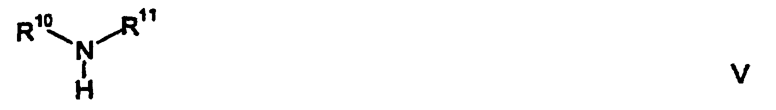 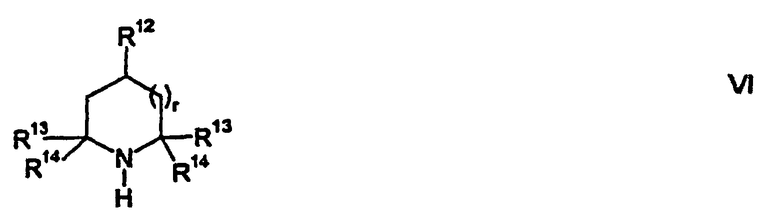 dans laquelle
R¹⁰ et R¹¹ représentent alkyle ou cycloalkyle ayant 1 à 15 atomes C, aryle ou triméthylsilyle ou triéthylsilyle, R¹² présente la signification H, OH, alkoxy ou cycloalkoxy ayant 1 à 15 atomes C, triméthylsilyloxy ou triéthylsilyloxy, et r présente la signification 0, 1 ou 2, et R¹³ et R¹⁴ représentent H, alkyle ayant 1 à 5 atomes C ou aryle.

4. Procédé selon l'une les revendications précédentes, **caractérisé en ce que** la déprotonation est mise en oeuvre en utilisant des composés alkyle ou aryllithium, un hydrure de potassium ou un hydrure de sodium.

5. Procédé selon l'une les revendications précédentes, **caractérisé en ce que** la déprotonation est mise en oeuvre en présence de tert-butoxyde de potassium.

6. Procédé selon l'une les revendications précédentes, dans lequel les matériaux de départ sont amenés à réagir à des températures de - 80°C à +40°C.
